# EUROPEAN PATENT APPLICATION

(11) **EP 4 496 403 A1**
(43) Date of publication of application: **22.01.2025**
(21) Application number: 22931470.3
(22) Date of filing: 18.03.2022
(51) Int. Cl.: H04W 72/04

(54) **COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: RGTH
(86) International application number: PCT/CN2022/081818
(87) International publication number: WO 2023/173439

(57) **Abstract**

The present application relates to a communication method, a terminal device, a network device, a computer-readable storage medium, a computer program product, and a computer program. The method includes: monitoring, by the terminal device, a wake-up signal (WUS), where the WUS is used to wake up the terminal device; theWUS carries first information, and the first information is used for an operation performed by the terminal device after being woken up.

## Description

### TECHNICAL FIELD

The present application relates to the field of communication, and more specifically, to a communication method, a terminal device, a network device, a computer-readable storage medium, a computer program product, and a computer program.

### BACKGROUND

With the development of technology, more attention is paid to power saving of terminal devices. Therefore, a method is proposed in which the terminal device uses a receiver with lower power consumption. In this method, a main receiver of the terminal device may be woken according to actual needs to perform relevant processing. However, in this way, how to ensure that the terminal device can perform subsequent operations in a timely manner becomes a problem that needs to be solved.

### SUMMARY

Embodiments of the present application provide a communication method, a terminal device, a network device, a computer-readable storage medium, a computer program product, and a computer program.

The embodiments of the present application provide a communication method, including:
monitoring, by the terminal device, a wake-up signal (WUS), where the WUS is used to wake up the terminal device; the WUS carries first information, and the first information is used for an operation performed by the terminal device after being woken up.

The embodiments of the present application provide a communication method, including:
transmitting, by the network device, a wake-up signal (WUS), where the WUS is used to wake up the terminal device; the WUS carries the first information, and the first information is used for an operation performed by the terminal device after being woken up.

The embodiments of the present application provide a terminal device, including:
a first communication unit, configured to monitor a wake-up signal (WUS); where the WUS is used to wake up the terminal device; the WUS carries first information, and the first information is used for an operation performed by the terminal device after being woken up.

The embodiments of the present application provide a network device, including:
a second communication unit, configured to transmit a wake-up signal (WUS); where the WUS is used to wake up a terminal device; the WUS carries first information, and the first information is used for an operation performed by the terminal device after being woken up.

The embodiments of the present application provide a terminal device, including a processor and a memory. The memory is configured to store a computer program, and the processor is configured to invoke and execute the computer program stored in the memory, to cause the terminal device to perform the above method.

The embodiments of the present application further provide a network device, including a processor and a memory. The memory is configured to store a computer program, and the processor is configured to invoke and execute the computer program stored in the memory, to cause the network device to perform the above method.

The embodiments of the present application provide a chip, configured to implement the above methods.

Specifically, the chip includes: a processor, configured to invoke and execute a computer program from a memory, to cause a device equipped with the chip to perform the above methods.

The embodiments of the present application provide a computer-readable storage medium for storing a computer program, and the computer program, when executed by a device, causes the device to perform the above methods.

The embodiments of the present application provide a computer program product, which includes computer program instructions, and the computer program instructions cause a computer to perform the above methods.

The embodiments of the present application provide a computer program, and the computer program, when executed on a computer, causes the computer to perform the above methods.

By adopting the above solution, the terminal device may receive the WUS. The WUS may be used to wake up the terminal device. That carried in the WUS may be used for operations performed by the terminal device after being woken up. In this way, the terminal device may be woken up based on a reception of the WUS and may perform the operations after being woken up in a timely manner based on the first information in the WUS, thereby shortening a latency of the traffic transmission and improving the processing efficiency of a system.

### BRIEF DESCRIPTION OF THE DRAWINGS

FIG. 1 is a schematic diagram of an application scenario according to the embodiments of the present application.
FIG. 2 is a schematic diagram of a scenario according to a processing method for introducing an energy-saving signal in DRX.
FIG. 3 is a schematic diagram of a scenario according to waking up a terminal device with an energy-saving signal to receive a paging message
FIG. 4 is a schematic flowchart of a communication method according to an embodiment of the present application.
FIG. 5 is a schematic diagram of a composition of a terminal device according to an embodiment of the present application.
FIG. 6 is another schematic flowchart of a communication method according to an embodiment of the present application.
FIG. 7 is a schematic block diagram of a terminal device according to an embodiment of the present application.
FIG. 8 is a schematic block diagram of a terminal device according to another embodiment of the present application.
FIG. 9 is a schematic block diagram of a network device according to an embodiment of the present application.
FIG. 10 is a schematic block diagram of a communication device according to the embodiments of the present application.
FIG. 11 is a schematic block diagram of a chip according to the embodiments of the present application.
FIG. 12 is a schematic block diagram of a communication system according to the embodiments of the present application.

### DETTAILED DESCRIPTION

The technical solutions in the embodiments of the present application will be described below in conjunction with the drawings in the embodiments of the present application.

The technical solutions of the embodiments of the present application may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present application may also be applied to these communication systems.

In a possible implementation, the communication system in the embodiments of the present application may be applied to a carrier aggregation (CA) scenario, may also be applied to a dual connectivity (DC) scenario, and may also be applied to a standalone (SA) network deployment scenario.

In a possible implementation, the communication system in the embodiments of the present application may be applied to an unlicensed spectrum, where the unlicensed spectrum may also be considered as a shared spectrum, or the communication system in the embodiments of the present application may also be applied to a licensed spectrum, where the licensed spectrum may also be considered as an unshared spectrum.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc. The terminal device may be a station (STAION, ST) in the WLAN, may be a cellular phone, a cordless phone, a Session Initiation Protocol (SIP) phone, a Wireless Local Loop (WLL) station, or a personal digital processing (Personal Digital Assistant, PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present application, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.). In the embodiments of the present application, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present application, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the application, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device or a base station (gNB) in an NR network, or a network device in the PLMN network evolved in the future or a network device in the NTN network, etc.

As an example but not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places. In the embodiments of the present application, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc, these small cells have characteristics of small coverage range and low transmission power, which are applicable for providing a data transmission service with high speed.

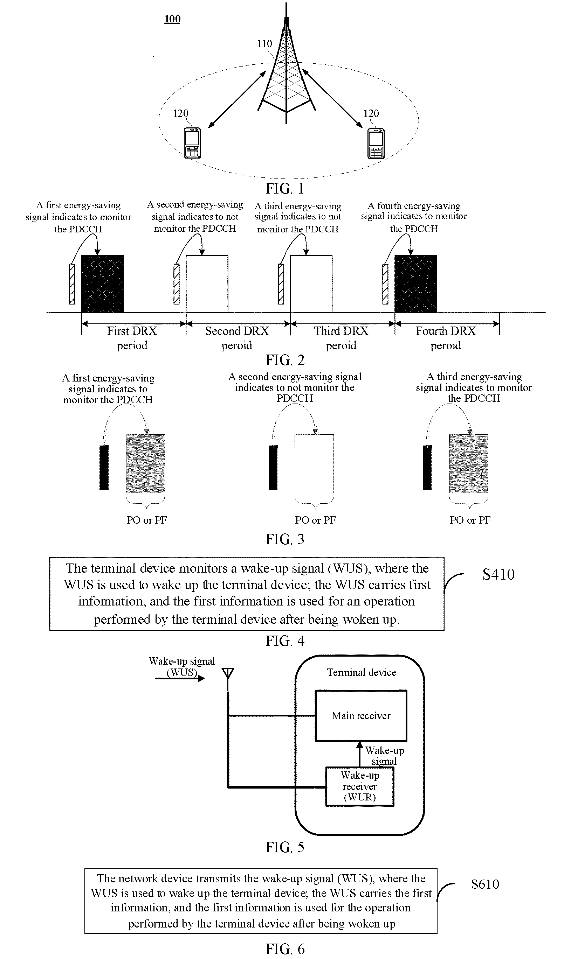

FIG. 1 exemplarily shows a communication system 100. The communication system includes one network device 110 and two terminal devices 120. In a possible implementation, the communication system 100 may include multiple network devices 110, and other numbers of terminal devices 120 may be included within a coverage range of each network device 110, which is not limited by the embodiments of the present application.

In a possible implementation, the communication system 100 may also include other network entities such as a mobility management entity (MME), and an access and mobility management function (AMF), etc., which is not limited by the embodiments of the present application. Herein, the network device may also include an access network device and a core network device. That is, the wireless communication system also includes multiple core networks for communicating with the access network device. The access network device may be an evolutional base station (evolutional node B, referred to as eNB or e-NodeB for short), a macro base station, a micro base station (also referred to as a "small base station"), a pico base station, an access point (AP), a transmission point (TP) or a new generation base station (new generation Node B, gNodeB), etc., in a long-term evolution (LTE) system, a next-generation (mobile communication system) (next radio, NR) system or an authorized auxiliary access long-term evolution (LAA-LTE) system.

It should be understood that in the embodiments of the present application, a device with a communication function in the network/system may be referred to as a communication device. Taking the communication system shown in FIG. 1 as an example, the communication device may include a network device and a terminal device with the communication function. The network device and the terminal device may be specific devices in the embodiments of the present application, which will not be repeated herein. The communication device may also include other devices in the communication system, such as a network controller, a mobility management entity, and other network entities, which is not limited by the embodiments of the present application.

To facilitate the understanding of the embodiments of the present application, basic processes and basic concepts involved in the embodiments of the present application are briefly described below. It should be understood that the basic processes and basic concepts introduced below do not limit the embodiments of the present application.

The main application scenarios of 5G are: enhanced mobile ultra broadband (Enhanced Mobile Broadband, eMBB), Ultra Reliable Low Latency Communications (URLLC), and massive Machine Type Communications (mMTC). Herein, eMBB aims to enable users to obtain multimedia contents, services and data, and demands for the eMBB is growing rapidly. Since the eMBB may be deployed in different scenarios, such as indoors, in urban areas, and in rural areas, differences of capabilities and demands of the eMBB are relatively great, so it must be analyzed in detail in combination with specific deployment scenarios. Typical applications of the URLLC include: industrial automation, power automation, remote medical operation (e.g., surgery), transportation safety security, etc. Typical characteristics of the mMTC include: high connection density, small data volumes, delay-insensitive services, low cost, and long service life, etc.

In the 5G network environment, for the purpose of reducing air interface signaling, restoring wireless connections quickly, and restoring data traffics quickly, a new RRC (Radio Resource Control) state is defined, that is, an RRC_INACTIVE (RRC inactive) state. This state is different from an RRC_IDLE (RRC idle) state, RRC_ACTIVE (RRC active) state or RRC_CONNECTED (RRC connected) state.

The energy saving of the terminal device (or referred to as a UE) is described respectively below:

First, for the energy saving of the terminal device in the RRC_CONNECTED state: in the evolution of 5G, a higher requirement is placed on the power saving of the UE (i.e., the terminal device). For example, for the existing DRX (Discontinuous Reception) mechanism, during each ON duration (active time), the UE (i.e., the terminal device) needs to continuously detect a PDCCH (Physical Downlink Control CHannel) to judge whether the base station schedules a data transmission sent to the UE itself. For most UEs (i.e., the terminal devices), they may not have the need to receive the data transmission for a long time, but still need to keep a regular wake-up mechanism to monitor a possible downlink transmission. For this type of UEs (i.e., the terminal devices), there is a space for further optimization of power saving.

In the R16 standard, an energy-saving signal is introduced to achieve further energy saving. The energy-saving signal may be used in combination with the DRX mechanism. A processing method for introducing the energy-saving signal may specifically include: receiving, by the terminal device, the energy-saving signal (or referred to as an energy-saving wake-up signal) before a DRX ON duration. That is, when there is a data transmission for one terminal device in one DRX period, the network device may "wake up" the terminal device by the energy-saving signal, so that the terminal device monitors the PDCCH during the DRX ON duration after being woken up; otherwise, when there is no data transmission for one terminal device in one DRX period, no energy-saving signal is transmitted to the terminal device (that is, the terminal device is not "woken up"), so that the terminal device does not need to monitor the PDCCH during the DRX ON duration. Compared with the existing DRX mechanism, the above-mentioned processing method for introducing the energy-saving signal can omit the monitoring of the PDCCH during the DRX ON duration, when there is no data transmission for the terminal device, thereby achieving the energy saving of the terminal device. Herein, the energy-saving signal may be carried by a DCI (DownLink Control Information) format 2_6.

The time of the terminal device outside the DRX (Discontinuous Reception) ON duration is referred to as an inactive time, and the time during the DRX ON duration is referred to as an active time. In combination with FIG. 2, the processing method for introducing the energy-saving signal in the DRX is described, and the processing method may include: a first energy-saving signal indicates to monitore the PDCCH, then the terminal device monitors the PDCCH within an ON duration of a first DRX period (the ON duration of the first DRX period is represented as a black block in FIG. 2) after receiving the first energy-saving signal; a second energy-saving signal indicates to not monitore the PDCCH, then the terminal device does not monitor the PDCCH within an ON duration of a second DRX period (the ON duration of the second DRX period is represented as a colorless block in FIG. 2) after receiving the second energy-saving signal; a third energy-saving signal indicates to not monitore the PDCCH, then the terminal device does not monitor the PDCCH within an ON duration of a third DRX period (the ON duration of the third DRX period is represented as a colorless block in FIG. 2) after receiving the third energy-saving signal; a fourth energy-saving signal indicates to monitore the PDCCH, then the terminal device monitors the PDCCH within an ON duration of a fourth DRX period (the ON duration of the fourth DRX period is represented as a black block in FIG. 2) after receiving the fourth energy-saving signal.

In the R17 standard, in order to further enhance the energy saving of the UE (i.e., the terminal device) in the connected state (i.e., the RRC_CONNECTED state), an enhanced scheme of search space set group switching of R16 and a scheme of skipping the PDCCH monitoring in a gap of the data transmission (i.e., a scheme of PDCCH skipping) are introduced to achieve the power saving. Herein, control information related to the search space set group switching and the PDCCH skipping may be carried by the PDCCH.

Second, for the energy saving of the terminal device in the RRC-Idle (RRC_IDLE) / RRC-inactive (RRC_INACTIVE) state: the terminal device in the RRC idle/inactive state receives a paging message in the manner of the DRX. Since there is one paging occasion (PO) within one DRX period, the terminal device only receives the paging message during the PO and does not receive the paging message at the time outside the PO, thereby achieving the purpose of power saving. However, in actual situations, a probability of the terminal device being paged may not be high, therefore, if the terminal device periodically detects the PDCCH on the corresponding PO, and there is a high probability that the paging message sent to the terminal device itself is not detected, it will objectively cause a waste of power.

Similar to the energy saving of the terminal device in the RRC_CONNECTED state in the R16 standard, in the R17 standard, the energy saving of the terminal device in the idle state for receiving the paging message is optimized, and an energy-saving signal similar to the aforementioned energy-saving signal is introduced, which is referred to as a PEI (paging early indication). The PEI is used to indicate whether the terminal device receives a paging PDCCH during a target PO before the target PO arrives. The above-mentioned energy-saving signal (i.e., the PEI) (hereinafter referred to as an energy-saving signal based on a PDCCH channel, for the convenience of description) is carried on a PDCCH channel, and specifically, the energy-saving signal (i.e., the PEI) is carried by DCI (Downlink Control Information) format 2_7. The energy-saving signal based on the PDCCH channel may carry more energy-saving information, for example, may carry sub-grouping information for indicating a terminal device sub-grouping (or a UE sub-grouping) corresponding to the energy-saving information. Multiple terminal device groups may be obtained by further grouping multiple terminal devices corresponding to the same PO according to UE_IDs (identifications). If there is any terminal device that needs to be paged, in the terminal device group to which a terminal device belongs, the terminal device needs to receive the paging message on the PO; otherwise, the terminal device does not need to receive the paging message. By combining the terminal device group (or terminal device sub-grouping) information with the energy-saving information as above, the terminal device which needs to or not to receive the paging at the target PO, may be indicated more precisely. For example, a scenario in which a terminal device is woken up by an energy-saving signal to receive a paging message, is shown in FIG. 3: a first energy-saving signal indicates that a terminal device in one or more terminal device groups receives paging on a corresponding PF (Paging Frame) or PO (the PF or PO indicated by the first energy-saving signal is represented as a gray block in FIG. 3), then terminal devices within the terminal device group monitor the paging on the PF or PO after being woken up; a second energy-saving signal indicates not to monitor the PDCCH, that is, indicates that terminal devices in one or more terminal device groups do not receive paging on a corresponding PF or PO (the PF or PO indicated by the second energy-saving signal is represented as a colorless block in FIG. 3), then the terminal devices in the terminal device group may not monitor the paging on the PF or PO; a third energy-saving signal indicates that a terminal device in one or more terminal device groups receives paging on a corresponding PF or PO (the PF or PO indicated by the third energy-saving signal is represented as a gray block in FIG. 3), then terminal devices within the terminal device group monitor the paging on the PF or PO after being woken up.

For further power saving of the terminal device, the R18 standard plans to introduce a scheme of a wake-up receiver (WUR) receiving the energy-saving signal. The WUR has the characteristics of extremely low cost, extremely low complexity and extremely low power consumption, and it receives the energy-saving signal in a manner based on envelope detection mainly. Therefore, the energy-saving signal received by the WUR is different from the signal carried based on the PDCCH defined in the existing R16, and R17 standards in modulation methods, waveforms, etc. The energy-saving signal is mainly an envelope signal obtained by performing an ASK modulation on a carrier signal. The demodulation for the envelope signal may also be accomplished by driving a low power comsunption circuit based on energy provided by a wireless radio frequency signal, so it may be passive. The WUR may also be powered by the terminal device, and regardless of the power supply method, the WUR greatly reduces the power consumption, compared to the traditional receiver of the terminal device. For example, the WUR may achieve the power consumption less than 1mw (milliwatt), which is much lower than the power consumption of the traditional receiver ranging from tens to hundreds of mW. The WUR may be combined with the terminal device as an additional module of a receiver of a terminal device, or may be a wake-up function module of a terminal device separately.

It should be understood that the terms "system" and "network" herein are often used interchangeably herein. The term "and/or" herein is only an associated relationship for describing associated objects, meaning that there may be three kinds of relationships, for example, A and/or B may mean three cases where: A exists alone, both A and B exist, and B exists alone. In addition, the character "/" herein generally means that associated objects before and after "/" are in an "or" relationship.

It should be understood that the "indication" mentioned in the embodiments of the present application may be a direct indication, an indirect indication, or may also represent having an associated relationship. For example, A indicates B, which may mean that A directly indicates B, for example, B may be acquired by A; may also mean that A indirectly indicates B, for example, A indicates C, and B may be acquired by C; may also mean that there is an associated relationship between A and B.

In the description of the embodiments of the present application, the term "corresponding" may mean that there is a direct correspondence or indirect correspondence between two objects, may also mean that there is an associated relationship between two objects, or may also mean relationships between "indicating" and "being indicated", between "configuring" and "being configured", etc.

To facilitate the understanding of the technical solutions of the embodiments of the present application, the relevant technologies of the embodiments of the present application are described below. The following relevant technologies as optional solutions may be arbitrarily combined with the technical solutions of the embodiments of the present application, which all belong to the protection scope of the embodiments of the present application.

FIG. 4 is a schematic flowchart of a communication method according to an embodiment of the first aspect of the present application. The method can optionally be applied to the system shown in FIG. 1, but not limited thereto. The method includes at least a portion of the following contents.

S410, the terminal device monitors a wake-up signal (WUS). The WUS is used to wake up the terminal device; the WUS carries first information, and the first information is used for an operation performed by the terminal device after being woken up.

The terminal device monitoring the WUS may refer to: the terminal device monitoring the WUS in a case where the terminal device is in an idle state. The terminal device may specifically be a low-power consumption device; or the low-power consumption device may also be called a zero-power consumption device. The terminal device, that is, the low-power consumption device, may include a first component and a second component, the power consumption of the first component is lower than the power consumption of the second component. Accordingly, the terminal device monitoring the WUS in the above S410 may be that: the first component of the terminal device monitors the WUS. More specifically, the terminal device monitoring the WUS may be that when the terminal device is in an RRC idle state, the first component of the terminal device monitors the WUS.

It needs to be pointed out that, in the process of the first component of the terminal device monitoring the WUS, the second component of the terminal device may be in a dormant state. The dormant state may mean that a portion of functions or a portion of members of the second component are in an ON state, but another portion of the functions or another portion of the members are in an OFF state or in a pending woken-up state, etc. The terminal device may only include the first component and the second component described above; or, the terminal device may include other components in addition to the first component and the second component described above, which are not exhaustively listed in this embodiment.

The first component may refer to a low power consumption receiver in the terminal device, or may be referred to as a wake-up receiver (WUR), or may be referred to as a zero-power consumption WUR, or may be referred to as a low-power consumption WUR, or may also be called a low-power consumption circuit, and more names for the first component are not exhaustively listed in this embodiment. The second component may refer to a main receiver in the terminal device.

Exemplarily, in conjunction with FIG. 5, the aforementioned terminal device is illustrated, and the terminal device is formed by a main receiver and a WUR shown in FIG. 5. Further, if the network device needs the terminal device to turn on or wake up the second component, i.e., the main receiver in FIG. 5, the network device may transmit a WUS to the terminal device. Correspondingly, the WUR of the terminal device may monitor the WUS; in a case where the WUR of the terminal device monitors the WUS, the main receiver (i.e., the aforementioned second component) of the terminal device is controlled to be turned on or woken up; in a case where the WUR of the terminal device does not monitor the WUS, the main receiver of the terminal device may keep in the dormant state. That is, when the terminal device does not have a traffic or a paging message, the terminal device may only use the WUR (i.e., the first component) to continuously monitor the WUS; only when the terminal device has a traffic or a paging message, the WUR of the terminal device monitors the WUS, and then the main receiver of the terminal device is woken up to receive and transmit data.

The WUS is exclusive to the UE; or the WUS is shared for a UE group, and the UE group may be a UE group including the terminal device; or the WUS is dedicated to a cell, and the cell may be a serving cell where the terminal device is located. Therefore, the WUS may also include: a UE identifier, where the UE identifier is a UE ID or a UE group UD or a cell ID.

It needs to be pointed out that, the UE identifier may be contained in the first information in the WUS, or the UE identifier may not be contained in the first information in the WUS. The specific information about a location of the UE identifier in the WUS is not limited in this embodiment.

Herein, the UE ID may refer to an identification of the terminal device, which may be a unique identifier of the terminal device, for example, the UE ID may be any one of the following: a Temporary Mobile Subscriber Identity (TMSI), an International Mobile Subscriber Identity (IMSI), and an I-RNTI (Inactive Radio Network Temporary Identifier).

The UE group may be composed of one or more terminal devices; one or more UE groups may be configured in the system, and different IDs are allocated to different UE groups in the one or more UE groups in the system to uniquely distinguish the different UE groups.

The cell ID may be one or more IDs corresponding to one or more cells contained in the system, respectively. The WUS is specifically used to wake up the terminal device that conforms to the UE identifier. That is, after receiving the WUS by the first component of the terminal device (i.e., WUR), the second component (i.e., the main receiver) may be woken up in a case where the terminal device itself is determined as the terminal device that conforms to the UE identifier based on the UE identifier carried in the WUS.

Herein, the method that the terminal device determines whether the terminal device itself is the terminal device that conforms to the UE identifier, may include: in a case where what the UE identifier includes is a UE ID, the terminal device determines whether the identifier of the terminal device is the same as the UE ID based on its own identifier, and in a case where the identifier of the terminal device is the same as the UE ID, the terminal device is determined as the terminal device that conforms to the UE identifier; or, in a case where what the UE identifier includes is a UE group ID, the terminal device determines whether an identifier of a UE group in which the terminal device is located is the same as the UE group ID based on the identifier of the UE group in which the terminal device is located, and in a case where the identifier of the UE group in which the terminal device is located is the same as the UE group ID, the terminal device is determined as the terminal device that conforms to the UE identifier; or in a case where what the UE identifier includes is a cell ID, the terminal device determines whether an identifier of a cell in which the terminal device is located is the same as the cell ID based on the identifier of the cell in which the terminal device is located, and in a case where the identifier of the cell in which the terminal device is located is the same as the cell ID, the terminal device is determined as the terminal device that conforms to the UE identifier.

Optionally, the UE identifier may be replaced with a bitmap. A value of a bit in the bitmap may be used to indicate whether to wake up a corresponding terminal device or a UE group. For example, a first value indicates to wake up the terminal device, and a second value indicates not to wake up the terminal device or the UE group. The first value is different from the second value, for example, the first value is 1 and the second value is 0, or vice versa.

For example, the WUS carries the bitmap, and the bitmap may include Q bits, where Q is an integer greater than or equal to 1. Among the Q bits included in the bitmap, each bit may be used to correspond to a UE group, and different bits correspond to different UE groups. Among the Q bits, a value of each bit may be used to indicate whether to wake up a terminal device in a corresponding UE group. Herein, the value of each bit may include a binary first value and a binary second value. The binary first value is used to indicate to wake up the terminal device in the corresponding UE group, that is, the binary first value is used to indicate the terminal device in the corresponding UE group to wake up the second component, the binary second value is used to indicate not to wake up the terminal device in the corresponding UE group, that is, the binary second value is used to indicate the terminal device in the corresponding UE group does not wake up the second component. The binary first value and the binary second value are different, for example, the binary first value is 1 and the binary second value is 0, or the binary first value is 0 and the binary second value is 1. For example, after receiving the WUS, the first component of the terminal device (i.e., WUR) obtains a bitmap from the WUS, and obtains a value of a bit corresponding to the UE group in which the terminal device is located from the bitmap. If the value of the bit is the binary first value, the terminal device may wake up the second component (i.e., the main receiver).

To make it easy to distinguish, differences between the WUR and the main receiver are introduced below in terms of modulation manners, modulation waveforms, transmission rates, supported bandwidth ranges, code rates, etc.: In terms of the modulation manners supported by the two, the complexity of the modulation manner supported by the WUR is lower than the complexity of the modulation manner supported by the main receiver. In some implementations, the modulation manner supported by the WUR may include one or more of the following modulation manners: amplitude shift keying (ASK), phase shift keying (PSK), frequency shift keying (FSK), etc. Correspondingly, the modulation manner supported by the main receiver may include one or more of the following modulation manners: quadrature phase shift keying (QPSK), quadrature amplitude modulation (QAM), orthogonal frequency division multiplexing (OFDM), etc. Of course, in some other implementations, the main receiver may also support at least one modulation manner of the ASK, PSK, or FSK. This is not specifically limited by the embodiments of the present application. In terms of the modulation waveforms supported by the two, the complexity of the modulation waveform supported by WUR is lower than the complexity of the modulation waveform supported by the main receiver. For example, the modulation waveform supported by the WUR may include one or more of the following modulation waveforms: a waveform corresponding to an ASK signal, a waveform corresponding to a PSK signal, and a waveform corresponding to an FSK signal. Correspondingly, the modulation waveform supported by the main receiver may include one or more of the following modulation waveforms: a waveform corresponding to a QPSK signal, a waveform corresponding to a QAM signal, and a waveform corresponding to an OFDM signal. Of course, in some embodiments, the modulation waveform supported by the main receiver may also include waveforms corresponding to one or more signals of the ASK signal, PSK signal, and FSK signal. In terms of the transmission rates supported by the two, the transmission rate supported by the WUR is lower than the transmission rate supported by the main receiver. In terms of the bandwidth ranges supported by the two, the bandwidth range supported by the WUR is smaller than the bandwidth range supported by the main receiver, or in other words, the bandwidth supported by the WUR is narrower than the bandwidth supported by the main receiver. In terms of the code rates supported by the two, the code rate supported by the WUR is lower than the code rate supported by the main receiver.

In the scheme provided in this embodiment, the terminal device only uses the first component (i.e., the WUR) to monitor the WUS, which may save the power consumption of the terminal device. This is due to using extremely low power consumption (generally, less than 1mw) when the WUR of the terminal device is working; and the WUR of the terminal device uses a manner of the ASK or FSK to modulate a signal, which also enables the WUR of the terminal device to use an extremely simple hardware structure and an extremely simple receiving method to receive and demodulate the signal. For example, for an ASK signal, the WUR of the terminal device only needs to use a manner of envelope detection to receive the signal. Therefore, compared to the traditional mode in which the terminal device always uses the main receiver, this embodiment adopts the WUR of the terminal device to monitor the WUS, which can greatly save the power consumption of the terminal device.

The above WUS may also be called a low-power consumption WUS, or may be referred to as other names, which are not exhaustively listed in this embodiment.

In addition to being used to wake up the terminal device, the WUS may also carry the aforementioned first information, where the first information is used for an operation performed by the terminal device after being woken up. Exemplarily, the operation performed by the terminal device after being woken up may include one or more of the following: random access, initial access, and time-frequency synchronization.

Specifically, the first information may include one or more information of the following: information for performing the random access, where the information for performing the random access is configuration information of a first PRACH (Physical Random Access Channel) resource; information for performing the initial access, where the information for performing the initial access is configuration information of a target initial BWP (BandWidth Part) resource; and information for performing the time-frequency synchronization, where the information for performing the time-frequency synchronization is configuration information of a synchronization signal.

The specific contents contained in the above first information are described in detail below.

The configuration information of the first PRACH resource may include one or more of the following: time domain resource location information of a first PRACH; frequency domain resource location information of the first PRACH; a period of the first PRACH; a slot of the first PRACH; a subcarrier spacing of the first PRACH; a number of first PRACH occasions; a mapping relationship between the first PRACH and a synchronization signal block (SSB); time domain resource location information of a first PRACH occasion; frequency domain resource location information of the first PRACH occasion; and a preamble index number.

Herein, time domain resource information of the first PRACH is described in following two cases.

In one case, the time domain resource information of the first PRACH may include an absolute time domain location of the time domain resource of the first PRACH. Specifically: the time domain resource information of the first PRACH includes one or more of the following: a time domain location of a time domain resource of the first PRACH; and a duration of the time domain resource of the first PRACH.

Herein, the time domain location of a time domain resource of the first PRACH includes: a time domain starting location of the time domain resource of the first PRACH, or a time domain ending location of the time domain resource of the first PRACH.

The duration of the time domain resource of the first PRACH may refer to a length in the time domain occupied by the first PRACH resource. Any one of slot, symbol, subframe, millisecond, etc., may be used as a unit for the duration. Exemplarily, the duration of the time domain resource of the first PRACH may be: 1 slot, or 2 slots, or 1 millisecond, or 3 milliseconds. The duration may be longer or shorter, which is illustrated as an example herein, and not as a limitation to the embodiment.

In one implementation, the time domain resource location information of the first PRACH specifically includes: the time domain starting location of the time domain resource of the first PRACH and the duration of the time domain resource of the first PRACH. The time domain starting location of the time domain resource of the first PRACH and the duration of the time domain resource of the first PRACH may be expressed in a unit of any one of symbol, slot, subframe, millisecond, microsecond, etc. For example, the time domain starting location of the time domain resource of the first PRACH may be expressed as the A1-th slot; the duration of the time domain resource of the first PRACH may be expressed as A2 milliseconds.

In another implementation, the time domain resource location information of the first PRACH specifically includes: the time domain starting location of the time domain resource of the first PRACH and the time domain ending location of the time domain resource of the first PRACH. The time domain starting location of the time domain resource of the first PRACH and the time domain ending location of the time domain resource of the first PRACH may be expressed in a unit of any one of symbol, slot, a subframe, millisecond, microsecond, etc. For example, the time domain starting location of the time domain resource of the first PRACH may be expressed as the A1-th slot; the time domain ending location of the time domain resource of the first PRACH may be expressed as the A3-th slot.

In yet another implementation, the time domain resource information of the first PRACH may include a relative time domain location of the time domain resource of the first PRACH. Specifically: the time domain resource location information of the first PRACH includes one or more of the following: a first time domain offset, where the first time domain offset is used to represent an offset between a reception time of the WUS and a time domain location of the time domain resource of the first PRACH; and a duration of the time domain resource of the first PRACH.

The duration of the time domain resource of the first PRACH may refer to a length in the time domain occupied by the first PRACH resource. Any one of slot, symbol, subframe, millisecond, etc., may be used as a unit for the duration. Exemplarily, the duration of the time domain resource of the first PRACH may be: 1 slot, or 2 slots, or 1 millisecond, or 3 milliseconds. The duration may be longer or shorter, which is illustrated as an example herein, and not as a limitation to the embodiment.

Since the WUS may occupy a period of the time domain resource, in this embodiment, a time (or a moment) in the period of the time domain resource occupied by the WUS may be designated as the reception time of the WUS. For example, the reception time of the WUS may include: a starting reception time of the WUS, or a reception completion time of the WUS. It should be understood that the reception time of the WUS may also be other time in the time domain resource occupied by the WUS, such as a midpoint time of the time domain resource occupied by the WUS, etc., as long as the terminal device and the network device both use the same reception time of the WUS.

Similarly, the time domain resource of the first PRACH may also occupy a period of the time domain resource, and a time (or a moment) in the time domain resource of the first PRACH may be designated as the time domain location of the time domain resource of the first PRACH. For example, the time domain location of the time domain resource of the first PRACH includes: a time domain starting location of the time domain resource of the first PRACH, and/or a time domain ending location of the time domain resource of the first PRACH. It should be understood that the time domain location of the time domain resource of the first PRACH may also be other time in the time domain resource of the first PRACH, such as a midpoint time of the time domain resource of the first PRACH, etc., as long as the terminal device and the network device both use the same time domain location of the time domain resource of the first PRACH.

The first time domain offset may include one numerical value or multiple numerical values. A unit of the first time domain offset may be any one of symbol, slot, subframe, millisecond, microsecond, etc.

In a possible implementation, the first time domain offset includes one numerical value, which is referred to as a first numerical value. The first numerical value may be used to represent a relative time offset between the time domain starting location of the time domain resource of the first PRACH and the reception time of the WUS (such as the starting reception time of the WUS); or, the value of the offset may be used to indicate a relative time offset between the time domain ending location of the time domain resource of the first PRACH and the reception time of the WUS (such as the starting reception time of the WUS).

In this implementation, the time domain resource location information of the first PRACH may also include: the duration of the time domain resource of the first PRACH. The terminal device may determine a specific location of the time domain resource of the first PRACH based on the time domain starting location (or time domain ending location) of the time domain resource of the aforementioned first PRACH and the duration of the time domain resource of the first PRACH.

For example, the first time domain offset is the first numerical value, the first numerical value is equal to A4, and a unit of the first time domain offset is slot. The terminal device may then determine that the time domain starting location of the time domain resource of the first PRACH is a location after the starting reception time of the WUS with a delay of A4 slots based on the starting reception time of the WUS. The terminal device may obtain the time domain ending location of the time domain resource of the first PRACH based on the time domain starting location of the time domain resource of the aforementioned first PRACH plus the duration of the time domain resource of the first PRACH; and designate a range between the time domain starting location and the time domain ending location of the time domain resource of the first PRACH as the specific location of the time domain resource of the first PRACH. As another example, the first time domain offset is the first numerical value, the first numerical value is equal to A5, and a unit of the first time domain offset is slot. The terminal device may then determine that the time domain starting location of the time domain resource of the first PRACH is a loation after the reception ending time of the WUS with a delay of A5 slots. The terminal device may obtain the time domain ending location of the time domain resource of the first PRACH based on the time domain starting location of the time domain resource of the aforementioned first PRACH plus the duration of the time domain resource of the first PRACH; and designate a range between the time domain starting location and the time domain ending location of the time domain resource of the first PRACH as the specific location of the time domain resource of the first PRACH.

In a possible implementation, when the first time domain offset includes two numerical values, for example, the two numerical values are respectively represented as a second numerical value and a third numerical value; where the second numerical value may be used to represent a relative time offset between the time domain starting location of the time domain resource of the first PRACH and the reception time of the WUS (such as the starting reception time of the WUS); the third numerical value may represent a relative time offset between the time domain ending location of the time domain resource of the first PRACH and the reception time of the WUS (such as the starting reception time of the WUS). Herein, the second numerical value is smaller than the third numerical value. A unit of the first time domain offset (i.e., two values of the offset or multiple values of the offset) may be any one of symbol, slot, subframe, millisecond, microsecond, etc.

For example, the second numerical value is equal to A6 slots, the third value is equal to A7 slots, and A7 is greater than A6. The terminal device may determine that the time domain starting location of the time domain resource of the first PRACH is a location after the reception ending time of the WUS with a delay of A6 slots; and determine that the time domain ending location of the time domain resource of the first PRACH is a location after the reception ending time of the WUS with a delay of A7 slots.

It should be understood that in this embodiment, the reception ending time of the WUS may also be replaced with the starting reception time of the WUS or other time of the WUS, as long as the network device and the terminal device use the same time. No more exhaustive list is given herein.

When the first time domain offset includes two or more numerical values, the time domain resource location information of the first PRACH may not include the duration of the time domain resource of the first PRACH.

The frequency domain resource location information of the first PRACH may also be described in following two cases.

In one case, the frequency domain resource location information of the first PRACH is an absolute frequency domain location. The frequency domain resource location information of the first PRACH includes one or more of the following: a location of a first-type frequency point of a frequency domain resource of the first PRACH; and a size of the frequency domain resource of the first PRACH.

The first-type frequency point may be expressed in a unit of any one of PRB (physical resource block), RB (resource block), Khz, Mhz, etc. A number of the specified frequency points may be one or more.

The first-type frequency point of the frequency domain resource of the first PRACH includes one or more of the following: a lowest frequency point of the frequency domain resource of the first PRACH; a highest frequency point of the frequency domain resource of the first PRACH; and a central frequency point of the frequency domain resource of the first PRACH. It should be understood that the description herein is only for examplary illustration, and when actually performing the processing, the first-type frequency point may also be other frequency points. As long as the terminal device and the network device have the same definition or interpretation for the specified frequency point, they are all within the protection scope of this embodiment and are not listed exhaustively herein.

In a possible implementation, the frequency domain resource location information of the first PRACH may only include a location of the first-type frequency point of the frequency domain resource of the first PRACH. That is, the frequency domain resource location information of the first PRACH may not include the size of the frequency domain resource of the first PRACH. At this time, the first-type frequency point of the frequency domain resource of the first PRACH may be multiple frequency points. For example, the frequency domain resource location information of the first PRACH includes locations of the lowest frequency point and the central frequency point of the frequency domain resource of the first PRACH; or the frequency domain resource location information of the first PRACH includes locations of the lowest frequency point and the highest frequency point of the frequency domain resource of the first PRACH.

Taking the first-type frequency point of the frequency domain resource of the first PRACH being the lowest frequency point and the highest frequency point as an example, the terminal device may directly obtain the locations of the lowest frequency point and the highest frequency point in the frequency domain resource of the first PRACH contained in the frequency domain resource location information of the first PRACH, and designate a frequency domain range between the lowest frequency point and the highest frequency point of the frequency domain resource of the first PRACH as a frequency domain range of the first PRACH.

In a possible implementation, the frequency domain resource location information of the first PRACH may include the location of the first-type frequency point of the frequency domain resource of the first PRACH and the size of the frequency domain resource of the first PRACH.

At this time, the first-type frequency point of the frequency domain resource of the first PRACH may be one frequency point. For example, the frequency domain resource location information of the first PRACH includes the location of the lowest frequency point of the frequency domain resource of the first PRACH; or the location of the highest frequency point of the frequency domain resource of the first PRACH; or the location of the central frequency point of the frequency domain resource of the first PRACH.

Taking the first-type frequency point of the frequency domain resource of the first PRACH being the lowest frequency point as an example, the terminal device may directly obtain the location of the lowest frequency point in the frequency domain resource of the first PRACH contained in the frequency domain resource location information of the first PRACH. After obtaining the location of the lowest frequency point in the frequency domain resource of the first PRACH, the frequency domain range of the frequency domain resource of the first PRACH is determined according to the size of the frequency domain resource of the first PRACH. Taking the first-type frequency point of the frequency domain resource of the first PRACH being the central frequency point as an example, the terminal device may take a location of a central frequency point in the frequency domain resource of the first PRACH contained in the frequency domain resource location information of the first PRACH as basis. After obtaining the location of the central frequency point in the frequency domain resource of the first PRACH, the lowest frequency point and the highest frequency point of the frequency domain resource of the first PRACH can be determined according to the size of the frequency domain resource of the first PRACH, and the frequency domain resource between the lowest frequency point and the highest frequency point of the frequency domain resource of the first PRACH is used as the frequency domain range of the first PRACH.

In another case, the frequency domain resource location information of the first PRACH is a relative frequency domain location.

The frequency domain resource location information of the first PRACH includes one or more of the following: a first frequency domain offset, where the first frequency domain offset is used to represent an offset between a frequency domain location of the WUS and a first-type frequency point of a frequency domain resource of the first PRACH; and a size of the frequency domain resource of the first PRACH.

A frequency domain location of the WUS includes one of the following: a lowest frequency point in a frequency domain resource occupied by the WUS; a highest frequency point in the frequency domain resource occupied by the WUS; and a central frequency point in the frequency domain resource occupied by the WUS. It should be understood that the frequency domain location of the WUS may also be represented by other frequency points of the WUS, as long as the terminal device and the network device use the same frequency point, which is within the protection scope of this embodiment, and is not exhaustively listed herein.

The first-type frequency point of the frequency domain resource of the first PRACH includes one or more of the following: a lowest frequency point of the frequency domain resource of the first PRACH; a highest frequency point of the frequency domain resource of the first PRACH; and a central frequency point of the frequency domain resource of the first PRACH.

It should be understood that the description herein is only for examplary illustration, and when actually performing the processing, the first-type frequency point may also be other frequency points. As long as the terminal device and the network device have the same definition or interpretation for the first-type frequency point, they are all within the protection scope of this embodiment and are not listed exhaustively herein.

Herein, the size of the frequency domain resource of the first PRACH may be included in the frequency domain resource location information of the first PRACH; or the size of the frequency domain resource of the first PRACH may be pre-acquired by the terminal device. For example, the size of the frequency domain resource of the first PRACH may be transmitted to the terminal device by the network device via any one of DCI, a RRC signaling, and a system message when the terminal device was in an RRC connected state last time.

A unit of the first frequency domain offset may be any one of PRB, RB, Khz, Mhz, etc. The first frequency domain offset may include one or more numerical values.

In a possible implementation, when the first frequency domain offset includes one numerical value, the numerical value is referred to as a fourth numerical value. The first frequency domain offset value (i.e., the fourth numerical value) may be used to represent a relative frequency domain offset between one first-type frequency point of the frequency domain resource of the first PRACH and one frequency domain location of the WUS.

In this implementation, the frequency domain resource location information of the first PRACH may also include: the size of the frequency domain resource of the first PRACH.

For example, taking the first-type frequency point of the frequency domain resource of the first PRACH being the lowest frequency point, and the frequency domain location of the WUS being the central frequency point in the frequency domain resource occupied by the WUS as an example, in a case where the terminal device monitors the WUS, the location of the lowest frequency point of the frequency domain resource of the first PRACH is obtained based on the location of the central frequency point in the frequency domain resource occupied by the WUS by increasing (or reducing) the fourth numerical value. The terminal device may obtain the location of the highest frequency point of the frequency domain resource of the first PRACH based on the location of the lowest frequency point of the frequency domain resource of the first PRACH plus the size of the frequency domain resource of the first PRACH, and designate a range between the highest frequency point and the lowest frequency point of the frequency domain resource of the first PRACH as a specific range of the frequency domain resource of the first PRACH. As another example, taking the first-type frequency point of the frequency domain resource of the first PRACH being the central frequency point and the frequency domain location of the WUS being the highest frequency point in the frequency domain resource occupied by the WUS as an example, in a case where the terminal device monitors the WUS, the location of the central frequency point of the frequency domain resource of the first PRACH is obtained based on the location of the highest frequency point of the WUS by increasing (or reducing) the fourth numerical value. The terminal device may obtain the location of the highest frequency point of the frequency domain resource of the first PRACH based on the location of the central frequency point of the frequency domain resource of the first PRACH plus 1/2 of the size of the frequency domain resource of the first PRACH, obtain the location of the lowest frequency point of the frequency domain resource of the first PRACH based on the location of the central frequency point of the frequency domain resource of the first PRACH minus 1/2 of the size of the frequency domain resource of the first PRACH, and designate a range between the highest frequency point and the lowest frequency point of the frequency domain resource of the first PRACH as a specific range of the frequency domain resource of the first PRACH.

In a possible implementation, the first frequency domain offset includes two numerical values, which respectively are a fifth numerical value and a sixth numerical value; where the fifth numerical value may be used to represent a relative frequency domain offset between one first-type frequency point of the frequency domain resource of the first PRACH and one frequency domain location of the WUS; and the sixth numerical value is used to represent a relative frequency domain offset between another first-type frequency point of the frequency domain resource of the first PRACH and one frequency domain location of the WUS. In this implementation, the frequency domain resource location information of the first PRACH may not include the size of the frequency domain resource of the first PRACH. For example, taking one first-type frequency point of the frequency domain resource of the first PRACH being the lowest frequency point, another first-type frequency point being the highest frequency point, and the frequency domain location of the WUS being the central frequency point in the frequency domain resource occupied by the WUS as an example, in a case where the terminal device monitors the WUS, the location of the lowest frequency point of the frequency domain resource of the first PRACH is obatined based on the location of the central frequency point in the frequency domain resource occupied by the WUS by reducing the fifth numerical value; the location of the highest frequency point of the frequency domain resource of the first PRACH is obtained based on the location of the central frequency point in the frequency domain resource occupied by the WUS by increasing the sixth numerical value. A range between the highest frequency point and the lowest frequency point of the frequency domain resource of the first PRACH is designated as a specific range of the frequency domain resource of the first PRACH.

In general, the time domain resource location information of the aforementioned first PRACH is used to determine the range of the time domain resource (or time domain location) of the first PRACH resource, and the frequency domain resource location information of the aforementioned first PRACH is used to determine the range of the frequency domain resource (or frequency domain range) of the first PRACH resource. The range of the time domain resource and the range of the frequency domain resource of the aforementioned first PRACH resource may refer to a location (or a total range) of a time-frequency resource used for the random access. In the actual processing, within the range of the time domain resource and range of the frequency domain resource of the first PRACH resource, there may be a first PRACH occasion (or referred to as a PRACH occasion in the first PRACH resource) with a finer granularity.

The finer granularity may refer to that within the range of the time domain resource and range of the frequency domain resource of the first PRACH resource, there are time domain resources and frequency domain resources respectively corresponding to one or more first PRACH occasions. In other words, a duration of any first PRACH occasion is shorter than the duration of the time domain resource of the aforementioned first PRACH, and/or a size of the frequency domain range of any first PRACH occasion is smaller than the size of the frequency domain resource of the aforementioned first PRACH.

A number of the first PRACH occasions may be configured according to the actual situations, and the number of the first PRACH occasions may specifically include one or more of the following: a total number of first PRACH occasions contained in the first PRACH resource (i.e., within the range of the time domain resource and the range of the frequency domain resource of the first PRACH), a number of first PRACH occasions contained in the time domain resource of the first PRACH; and a number of first PRACH occasions contained in the frequency domain resource of the first PRACH. It should be understood that the total number of first PRACH occasions contained in the first PRACH resource is greater than or equal to the number of first PRACH occasions contained in the time domain resource of the first PRACH; or the total number of first PRACH occasions contained in the first PRACH resource is greater than or equal to the number of first PRACH occasions contained in the frequency domain resource of the first PRACH.

As mentioned above, the number of the first PRACH occasions may be one or more. The description for a time-frequency location of a first PRACH occasion in the following embodiment may be understood as the description for a time-frequency location of any one of the one or more first PRACH occasions. The descriptions for the time-frequency locations of the first PRACH occasions are the same as each other, and are not repeated herein.

The time domain resource location information of the first PRACH occasion may include one or more of the following: a time domain starting location of the first PRACH occasion, a time domain ending location of the first PRACH occasion, and a duration of the first PRACH occasion. Herein, the duration of the first PRACH occasion is shorter than the duration of the time domain resource of the aforementioned first PRACH.

The time domain starting location/time domain ending location of the first PRACH occasion may be expressed in a unit of any one of slot, symbol, subframe, millisecond, etc.

In a possible implementation, the time domain resource location information of the first PRACH occasion includes the time domain starting location of the first PRACH occasion and the time domain ending location of the first PRACH occasion.

In another possible implementation, the time domain resource location information of the first PRACH occasion includes the time domain starting location of the first PRACH occasion and the duration of the first PRACH occasion. For example, the time domain starting location of the PRACH occasion is the a1-th symbol of the A3-th slot, and the duration of the PRACH occasion is A4 slots. As another example, the time domain starting location of the PRACH occasion is the A5-th subframe, and the duration of the PRACH occasion is A6 subframes.

The frequency domain resource location information of the first PRACH occasion may include one or more of the following: a location of a lowest frequency point of the first PRACH occasion, a location of a highest frequency point of the first PRACH occasion, a location of a central frequency point of the first PRACH occasion, and a size of a frequency domain range of the first PRACH occasion.

Herein, the size of the frequency domain range of the first PRACH occasion is smaller than the size of the frequency domain resource of the first PRACH. The location of the lowest frequency point, the location of the central frequency point, and the location of the highest frequency point of the first PRACH occasion may be in a unit of any one of PRB, RB, Khz, and Mhz.

In a possible implementation, the frequency domain resource location information of the first PRACH occasion includes the location of the lowest frequency point of the first PRACH occasion and the location of the highest frequency point of the first PRACH occasion. The terminal device may determine a range of the frequency domain resource of the first PRACH occasion based on the location of the lowest frequency point of the first PRACH occasion and the location of the highest frequency point of the first PRACH occasion.

In another possible implementation, the frequency domain resource location information of the first PRACH occasion includes the location of the lowest frequency point of the first PRACH occasion and the size of the frequency domain range of the first PRACH occasion. Based on the location of the lowest frequency point of the first PRACH occasion and the size of the frequency domain range of the first PRACH occasion, the range of the frequency domain resource of the first PRACH occasion may be determined.

For example, the location of the lowest frequency point of the first PRACH occasion is the B3-th PRB, and the size of the frequency domain range of the first PRACH occasion includes B4 PRBs. Of course, other units may also be used in the indication for the frequency domain location of the above PRACH occasion, such as RB, KHz, and MHz. For example, the frequency domain starting location of the PRACH occasion is B5 Mhz, and the size of the frequency domain range of the PRACH occasion may be B6 Mhz, which is not exhaustively listed herein.

In yet another possible implementation, the frequency domain resource location information of the first PRACH occasion includes the location of the central frequency point of the first PRACH occasion and the size of the frequency domain range of the first PRACH occasion. Based on the location of the central frequency point of the first PRACH occasion, and the size of the frequency domain range of the first PRACH occasion, the range of the frequency domain resource of the first PRACH occasion may be determined.

A mapping relationship between the first PRACH and the synchronization signal block (SSB) may specifically refer to a mapping relationship between a PRACH occasion and the SSB. More specifically, the mapping relationship between the first PRACH and the SSB may refer to: a mapping relationship between an SSB number and the PRACH occasion. Through the mapping relationship between the first PRACH and the SSB, the terminal device may determine a slot of the first PRACH.

The preamble index number may specifically refer to a preamble index number used by the terminal device this time. In the entire system, each first PRACH occasion may correspond to multiple pre-configured preambles (for example, there may be 64 preambles) and corresponding index numbers. The network device may indicate a preamble index number used this time via the configuration information of the first PRACH resource, for example, the network device may indicate a number of 6, 9 or other index numbers, which are not exhaustively herein. Correspondingly, the terminal device may obtain the preamble index number to be used this time by analyzing the configuration information of the first PRACH resource, and further determine the preamble to be used this time. It should be pointed out that the multiple pre-configured preambles and the corresponding index numbers may be pre-configured by the network device for the terminal device via a system broadcast message.

The period of the first PRACH may refer to a length of each period of the first PRACH. A unit of the period may be slot, symbol, subframe, microsecond, millisecond, etc. For example, a length of a period of a first PRACH is 10 slots. It should be pointed out that for the period of the first PRACH, after determining the first PRACH resource in a first period based on the time domain resource location information of the first PRACH and the frequency domain resource location information of the first PRACH, the one or more periods may be determined based on the period of the first PRACH, and a first PRACH resource in each of one or more periods may be determined. For example, lengths of the periods may be determined respectively according to the period of the first PRACH. Based on the time domain resource location information of the first PRACH and the frequency domain resource location information of the first PRACH, the range of the time domain resource of the first PRACH resource in the first period is determined as from the X1-th slot to the X2-th slot, and the frequency domain range is from the Y1-th PRB to the Y2-th PRB. Ranges of the time domain resources of the first PRACH in the periods may be determined respectively based on the lengths of the periods. For example, if a length of a period is L slots, the range of the time domain resource of the first PRACH in a second period may be from (L+X1)-th to (L+X2)-th slots, and the frequency domain range of the first PRACH in the second period may remain unchanged, which is from the Y1-th PRB to the Y2-th PRB.

The slot of the first PRACH may refer to a transmitting slot of the first PRACH, or may be referred to as a transmitting slot for transmitting random access preamble via the first PRACH. It should be understood that, in a case where the time domain resource location information of the first PRACH and the mapping relationship between the first PRACH and the SSB are configured in the configuration information of the first PRACH resource, the configuration information of the first PRACH resource may not include the slot of the first PRACH. Alternatively, in a case where the time domain resource location information of the first PRACH and the mapping relationship between the first PRACH and the SSB are not configured in the configuration information of the first PRACH resource, the configuration information of the first PRACH resource may include the slot of the first PRACH.

The subcarrier spacing of the first PRACH may refer to a subcarrier spacing used in the frequency domain resource of the first PRACH. The subcarrier spacing of the first PRACH may be the same as a subcarrier spacing of the current system. Alternatively, the subcarrier spacing of the first PRACH may be set according to the actual situations, for example, the subcarrier spacing of the first PRACH may be 15 kHz, 30 kHz, 60 kHz, 120 kHz, 240 kHz, etc., which are not exhaustively listed herein.

It should be understood that the first information carried by the WUS received by the terminal device may include one or more specific contents of the configuration information of the aforementioned first PRACH resource.

Furthermore, it may further include: determining, by the terminal device, the first PRACH resource based on the configuration information of the first PRACH resource; and performing, by the terminal device, the random access on the first PRACH resource.

As described above, the terminal device monitoring the WUS may specifically be: the terminal device monitoring the WUS in a case where the terminal device is in an idle state. Correspondingly, the terminal device determining the first PRACH resource based on the configuration information of the first PRACH resource contained in the first information carried by the WUS, and the terminal device performing the random access on the first PRACH resource may specifically refer to: in a case where the terminal device is in the idle state, the terminal device determining the first PRACH resource based on the configuration information of the first PRACH resource contained in the first information carried by the WUS, and then performing the random access on the first PRACH resource.

Before the terminal device monitoring the wake-up signal (WUS), the method further includes: receiving, by the terminal device, configuration information of a second PRACH resource configured by the network device; where the configuration information of the second PRACH resource is different from the configuration information of the first PRACH resource.

The configuration information of the second PRACH resource is used to determine the second PRACH resource for performing the random access; and a time domain resource location of the second PRACH resource is different from a time domain resource location of the first PRACH resource. That is to say, the terminal device can further acquire and save the configuration information of the second PRACH resource, and the second PRACH resource for performing the random access may be determined based on the configuration information of the second PRACH resource.

Specifically, the configuration information of the second PRACH resource is used to determine the second PRACH resource. Contents that may be carried in the configuration information of the second PRACH resource includes, but is not limited to: a time domain resource location of the second PRACH (e.g., at least one of a starting location, a ending location, and a duration), a frequency domain resource location of the second PRACH (e.g., at least one of a size of the frequency domain resource, a lowest frequency point, a highest frequency point, and a central frequency point), locations and numbers of second PRACH occasions, etc. The time domain resource location of the second PRACH resource determined based on the configuration information of the second PRACH resource is at least different from the time domain resource location of the first PRACH resource. Specifically, the second PRACH resource may be an original PRACH resource configured by the current system. For example, a period of the second PRACH resource configured by the system for the terminal device is relatively large (e.g., 20ms), that is, the period of the second PRACH resource may be greater than the period of the first PRACH resource, and/or a time domain starting location of the second PRACH resource is later than the time domain starting location of the first PRACH resource. This is because a device (e.g., a MME) of the core network determines that a certain terminal device in the idle state currently needs to perform the traffic transmission; the device of the core network may notify the network device to transmit the WUS to the terminal device which is in the idle state (or inactive state). Accordingly, the network device transmits the WUS to the terminal device which is in the idle state (or inactive state). In this case, the terminal device in the idle state is expected to perform the random access as soon as possible or in a timely manner, so that the terminal device may perform subsequent processing as soon as possible. However, the period of the second PRACH resource configured by the system for the terminal device is relatively large. In a case where the terminal device is in the idle state, if the terminal device performs the random access only based on the second PRACH resource after being woken up, the timeliness of the random access for the terminal device may not be guaranteed. Therefore, the network device may add the configuration information of the first PRACH resource in the first information carried by the WUS. Since the time domain starting location of the first PRACH resource is earlier than the time domain starting location of the first PRACH resource, and the period of the first PRACH resource is smaller than the period of the first PRACH resource, in a case where the terminal device is in the idle state (or inactive state), the terminal device may perform the random access earlier or more timely based on the first PRACH resource after being woken up by the WUS.

In a possible implementation, the first PRACH resource may be a temporary PRACH resource configured for a contention-based random access process. The purpose is to be able to configure the first PRACH resource earlier than the second PRACH resource configured by the current system. Therefore, at least the time domain resource location information of the first PRACH and the frequency domain resource location information of the first PRACH may be carried in the configuration information of the first PRACH resource (or the temporary PRACH resource), so that the terminal device may obtain the first PRACH resource (or the temporary PRACH resource) different from the second PRACH resource configured by the current system, and then initiate the random access to establish an RRC connection as soon as possible.

For example, the configuration information of the first PRACH resource (or the temporary PRACH resource) may include: the time domain resource location information of the first PRACH, the frequency domain resource location information of the first PRACH, the number of the first PRACH occasions, the mapping relationship between the first PRACH and the SSB, etc, which are not exhaustively listed herein. The time domain resource location information of the aforementioned first PRACH resource may specifically include the first time domain offset; and/or the frequency domain resource location information of the first PRACH may specifically include the first frequency domain offset. The descriptions of the first time domain offset and the first frequency domain offset are the same as that in the aforementioned embodiments and are not repeated herein.

In a possible implementation, the first PRACH resource may be a PRACH dedicated to the terminal device, so that the terminal device may perform a non-contention based random access, so as to avoid the interference with random access of other terminal devices during the random access process when the terminal device uses the contention-based random access, thereby ensuring that the success rate of the terminal random access is improved and accelerating the RRC connection establishment process of the terminal. In this implementation, the configuration information of the first PRACH resource in the first indication carried in the WUS may be configuration information of a dedicated PRACH resource. For example, the configuration information of the above first PRACH resource may include: the time domain resource location information of the first PRACH occasion, the frequency domain resource location information of the first PRACH occasion, and the preamble index number. The time domain resource location information of the first PRACH occasion may include the duration of the time domain resource of the first PRACH, etc.

Optionally, the configuration information of the first PRACH resource is specifically used to configure the terminal device that conforms to the UE identifier. That is, in a case where the terminal device determines that the terminal device itself is the terminal device that conforms to the UE identifier based on the UE identifier contained in the WUS, the terminal device may wake up the second component based on the WUS, and may determine the first PRACH resource based on the configuration information of the first PRACH resource contained in the first information of the WUS, and the terminal device may perform the random access on the first PRACH resource. Herein, performing the random access on the first PRACH resource (or temporary PRACH resource) may specifically refer to that the terminal device initiating random access request on the first PRACH resource (or temporary PRACH resource). The specific processing method regarding the UE identifier contained in the WUS and how the terminal device determines whether the terminal device itself is the terminal device that conforms the UE identifier has been illustrated in the previous embodiments, which is not repeated herein. The WUS may aslo carry a bitmap and a corresponding method for waking up the terminal device has been illustrated in detail in the above embodiments, which is not repeated herein.

### Various cases are described below for illustration

After the first component (i.e., the WUR) of the terminal device receiving the WUS, if the terminal device itself is determined as the terminal device comforms to the UE identifier, the first component (i.e., the WUR) of the terminal device wakes up the second component (i.e., the main receiver). The second component (i.e., the main receiver) of the terminal device determines the PRACH resource based on the configuration information of the first PRACH resource. The second component (i.e., the main receiver) of the terminal device determines the first PRACH resource (or temporary PRACH resource) based on the configuration information of the first PRACH resource (or temporary PRACH resource), and performs the random access on the first PRACH resource (or temporary PRACH resource) (specifically, may initiate the random access request).

Alternatively, after the first component (i.e., the WUR) of the terminal device receiving the WUS, if the terminal device itself is determined as the terminal device comforms to the UE identifier, the first component (i.e., the WUR) of the terminal device determines the first PRACH resource based on the configuration information of the first PRACH resource; the first component (i.e., the WUR) of the terminal device wakes up the second component (i.e., the main receiver); the main receiver (i.e., the second component) of the terminal device performs the random access on the first PRACH resource (or the temporary PRACH resource) (specifically, may initiate the random access request).

Alternatively, after the first component (i.e., the WUR) of the terminal device receiving the WUS, a bitmap is obtained from the WUS, and a value of a bit corresponding to a terminal device group in which the terminal device is located is obtained from the bitmap; if the value of the bit is a binary first value, the terminal device may wake up the second component (i.e., the main receiver); and the main receiver (i.e., the second component) of the terminal device performs the random access on the first PRACH resource (or the temporary PRACH resource) (specifically, may initiate the random access request).

Alternatively, after the first component (i.e., the WUR) of the terminal device receiving the WUS, if that the WUS does not carry any identifier of the terminal device or identifier of a terminal group is determined, the first component (i.e., the WUR) of the terminal device wakes up the second component (i.e., the main receiver); the second component (i.e., the main receiver) of the terminal device determines the first PRACH resource based on the configuration information of the first PRACH resource; in a case where the second component (i.e., the main receiver) of the terminal device determines the first PRACH resource (or the temporary PRACH resource) based on the configuration information of the first PRACH resource (or the temporary PRACH resource), the second component performs the random access on the first PRACH resource (or the temporary PRACH resource) (specifically, may initiate the random access request).

Optionally, the configuration information of the first PRACH resource may further include a new UE identifier, and the new UE identifier may also be one of: a new UE ID, a new UE group ID, and a new cell ID. Correspondingly, in a case where the terminal device determines that the terminal device itself is the terminal device that conforms to the UE identifier based on the UE identifier contained in the WUS, the second component may be woken up based on the WUS; in a case where the terminal device determines that the terminal device itself is the terminal device that conforms to the UE identifier based on the new UE identifier contained in the configuration information of the first PRACH resource, the configuration information of the first PRACH resource contained in the first information of the WUS may be used to determine the first PRACH resource. Such situations may also include: in a case where the terminal device determines that the terminal device itself is not the terminal device that conforms to the UE identifier based on the new UE identifier contained in the configuration information of the first PRACH resource, the configuration information of the first PRACH resource contained in the first information of the WUS may not be used.

Next, the configuration information of the target initial BWP contained in the first information and the processing performed by the terminal device based on the configuration information of the target initial BWP are illustrated below.

The configuration information of the target initial BWP includes: an ID of the target initial BWP, the target initial BWP is one or more initial BWPs in a plurality of initial BWPs, the plurality of initial BWPs include one or more initial uplink BWPs and/or one or more initial downlink BWPs, and the target initial BWP is an uplink BWP and/or a downlink BWP.

The terminal device may also pre-save configurations of the plurality of initial BWPs and index numbers of the plurality of initial BWPs. Specifically, the terminal device may pre-save configurations of one or more initial uplink BWPs and index numbers of the one or more initial uplink BWPs and/or configurations of one or more initial downlink BWPs and index numbers of the one or more initial downlink BWPs.

The configurations of the above plurality of initial BWPs and index numbers of the plurality of initial BWPs may be preset by the terminal device according to a protocol, or may be obtained from the network device. Regarding a method of obtaining the configurations of the plurality of initial BWPs and the index numbers of the plurality of initial BWPs from the network device, the specific method may be: the terminal device receiving second information, where the second information includes the configurations of the plurality of initial BWPs and index numbers of the plurality of initial BWPs. The second information may be second information received by the terminal device transmitted by the network device when the terminal device is in the RRC connected state. The second information may be carried in any one of a system broadcast message, a RRC signaling, and a MAC CE, which are not exhaustively listed herein.

The ID of the target initial BWP included in the configuration information of the target initial BWP may also be an index number of the target initial BWP. Herein, the target initial BWP may include an uplink BWP and/or a downlink. Accordingly, the ID (or index number) of the BWP target initial BWP may only include an ID (or index number) of the uplink BWP, or only include an ID (or index number) of the downlink BWP, or include the ID (or index number) of the uplink BWP and the ID (or index number) of the downlink BWP.

In a case where the configuration information of the target initial BWP contains different contents and the initial BWPs pre-configured by the terminal device are different, a method for the terminal device to determine the target initial BWP may be illustrated in multiple cases.

Case 1: The initial BWPs pre-configured by the terminal device include one initial downlink BWP and multiple initial uplink BWPs. The ID of the target initial BWP included in the configuration information of the target initial BWP may be an ID of an uplink BWP.

That is, in this case, since the terminal device pre-configures an initial downlink BWP, the terminal device may use the initial downlink BWP as a downlink BWP in the target initial BWP by default. Whether an ID of the target initial BWP contained is an uplink BWP or a downlink BWP is not needed to be indicated in the configuration information of the target initial BWP, the terminal device may designate the ID of the target initial BWP as an ID of the uplink BWP by default.

For example, if the configuration information of the target initial BWP in the first information carried in the WUS only includes the ID of the uplink BWP, the terminal device may determine the uplink BWP in the target initial BWP based on the ID of the uplink BWP, and then directly designate the initial downlink BWP pre-configured by the terminal device as the downlink BWP in the target initial BWP.

Case 2: The initial BWPs pre-configured by the terminal device include one initial uplink BWP and multiple initial downlink BWPs. The ID of the target initial BWP included in the configuration information of the target initial BWP may be an ID of a downlink BWP.

That is, in this case, since the terminal device pre-configures an initial uplink BWP, the terminal device may use the initial uplink BWP as an uplink BWP in the target initial BWP by default. Whether an ID of the target initial BWP contained is an uplink BWP or a downlink BWP is not needed to be indicated in the configuration information of the target initial BWP, the terminal device may designate the ID of the target initial BWP as an ID of the downlink BWP by default.

For example, if the configuration information of the target initial BWP in the first information carried in the WUS only includes the ID of the downlink BWP, the terminal device may determine the downlink BWP in the target initial BWP based on the ID of the downlink BWP, and then directly designate the initial uplink BWP pre-configured by the terminal device as the uplink BWP in the target initial BWP.

Case 3: The initial BWPs pre-configured by the terminal device include multiple initial uplink BWPs and multiple initial downlink BWPs. Usually, there are correspondences between IDs of the multiple initial uplink BWPs and IDs of the multiple initial downlink BWPs. Herein, a correspondence may refer to that an initial downlink BWP and an initial uplink BWP use the same ID (or index number). For example, the initial BWPs pre-configured by the terminal device includes 2 initial uplink BWPs and 2 initial downlink BWPs; the IDs of the 2 initial uplink BWPs are initial uplink BWP-0 and initial uplink BWP-1, respectively, and the IDs of the 2 initial downlink BWPs are initial downlink BWP-0 and initial downlink BWP-1, respectively. Alternatively, the correspondence may also refer to a matching relationship between an ID of a preset initial downlink BWP and an ID of a preset initial uplink BWP. For example, the initial BWPs pre-configured by the terminal device includes 2 initial uplink BWPs and 2 initial downlink BWPs; the IDs of the 2 initial uplink BWPs are initial uplink BWP-0 and initial uplink BWP-1, respectively, and the IDs of the 2 initial downlink BWPs are initial downlink BWP-3 and initial downlink BWP-2, respectively. Herein, a correspondence is preset between the initial uplink BWP-0 and the initial downlink BWP-2 (i.e., the two BWPs match), and a correspondence is preset between the initial uplink BWP-1 and the initial downlink BWP-3 (i.e., the two BWPs match).

Since the terminal device pre-configures an initial uplink BWP, and there are correspondence between the IDs of the multiple initial uplink BWPs and the IDs of the multiple initial downlink BWPs, the configuration information of the target initial BWP may include an ID of the target initial BWP, and the ID of the target initial BWP may be a ID of a downlink BWP. For example, if the configuration information of the target initial BWP in the first information carried in the WUS only includes the ID of the downlink BWP, the terminal device may determine the downlink BWP in the target initial BWP based on the ID of the downlink BWP, and then the terminal device determines a corresponding uplink BWP based on the ID of the downlink BWP in the target initial BWP according to the correspondences between the IDs of the pre-configured multiple initial uplink BWPs and the IDs of the pre-configured multiple initial downlink BWPs.

Case 4: The initial BWP pre-configured by the terminal device includes multiple initial uplink BWPs and multiple initial downlink BWPs. Differ from the aforementioned case 3, in this case, the correspondences between the IDs of the multiple initial uplink BWPs and the IDs of the multiple initial downlink BWPs may not be pre-configured in the terminal device. Therefore, the configuration information of the target initial BWP may include IDs of multiple target initial BWPs.

Optionally, the configuration information of the target initial BWP may include IDs of two target initial BWPs. The IDs of the two target initial BWPs may include an ID of a downlink BWP and an ID of a uplink BWP.

For example, if the configuration information of the target initial BWP in the first information carried in the WUS includes the ID of the downlink BWP and the ID of the uplink BWP, the terminal device may determine the downlink BWP in the target initial BWP based on the ID of the downlink BWP, and determine the uplink BWP in the target initial BWP based on the ID of the downlink BWP.

Optionally, the method may further include: determining, by the terminal device, the target initial BWP based on the configuration information of the target initial BWP contained in the first information carried in the WUS, so as to perform the initial access on the target initial BWP. Specifically, in a case where the first component of the terminal device receiving the WUS, the second component of the terminal device is woken up; the second component of the terminal device determines the target initial BWP based on the configuration information of the target initial BWP, so as to perform the initial access on the target initial BWP. Alternatively, in a case where the first component of the terminal device receiving the WUS, the second component of the terminal device is determined to be woken up based on relevant indication information carried in the WUS; in a case where the second component of the terminal device determines the target initial BWP based on the configuration information of the target initial BWP, the initial access is performed on the target initial BWP.

The above initial access may include processes such as a cell searching and random access. Through the cell searching, the terminal device and the network device may achieve downlink synchronization, and then the terminal device may perform the random access. For example, performing the initial access on the target initial BWP may be as follows: after the terminal device performing the cell searching and achieving the downlink synchronization with the network device, the terminal device may transmit a random access request (i.e., msg1) on the uplink BWP, and receive a random access response (i.e., msg2) transmitted by the network device on the downlink BWP; in a case where the target initial BWP also includes an uplink BWP, the terminal device transmits an RRC message (i.e., msg3) on the uplink BWP to notify the network device about a triggering reason for the random access process; and the terminal device receives contention conflict resolution information (i.e., msg4) on the downlink BWP.

Optionally, the configuration information of the target initial BWP is specifically used to configure the terminal device that conforms to the UE identifier. That is, in a case where the terminal device determines that the terminal device itself is the terminal device that conforms to the UE identifier based on the UE identifier contained in the WUS, the second component of the terminal device determines the target initial BWP based on the configuration information of the target initial BWP, so as to perform the initial access on the target initial BWP. The specific processing method regarding the UE identifier contained in the WUS and how the terminal device determines whether the terminal device itself is the terminal device that conforms the UE identifier has been illustrated in the previous embodiments, which is not repeated herein. The WUS may aslo carry a bitmap and a corresponding method for waking up the terminal device has been illustrated in detail in the above embodiments, which is not repeated herein.

Alternatively, the configuration information of the target initial BWP may further include a new UE identifier, and the new UE identifier may also be one of: a new UE ID, a new UE group ID, and a new cell ID. Correspondingly, in a case where the terminal device determines that the terminal device itself is the terminal device that conforms to the UE identifier based on the UE identifier contained in the WUS, the second component may be woken up based on the WUS. In a case where the terminal device determines that terminal device itself is the terminal device that conforms to the UE identifier based on the new UE identifier contained in the configuration information of the target initial BWP, the second component of the terminal device determines the target initial BWP based on the configuration information of the target initial BWP, so as to perform the initial access on the target initial BWP. In addition, such situations may also include: in a case where the terminal device is determined that the terminal device itself is not the terminal device that conforms to the UE identifier based on the new UE identifier contained in the configuration information of the target initial BWP, the second component of the terminal device does not determine the target initial BWP based on the configuration information of the target initial BWP.

Optionally, in the implementation provided in this embodiment, the terminal device is a reduced capability (RedCap) terminal. This is because, usually for other types of terminal devices, the system configures an initial BWP for them; but for a reduced capability (RedCap) terminal, due to the smaller bandwidth (usually 20MHz, which is less than the traditional 100MHz), fewer antennas, simpler modulation manners (such as 64QAM), and applying half-duplex FDD, etc., the system may pre-configure multiple initial BWPs for the RedCap terminal. By adopting the solution provided in this embodiment, multiple initial BWPs may be pre-configured to ensure that when the network device indicates different terminal devices to perform the initial access, the uplink BWP and/or downlink BWP to be used this time may be determined only by the first information in the WUS indicating the ID of the target initial BWP, and then the processing for the initial access is performed on the uplink BWP and/or downlink BWP, thereby achieving the effect of load diversion or load balancing. In addition, since this method does not require the terminal device side to save too much information generated during the interaction process, the resource fragments may be reduced, which is more suitable for a narrowband RedCap terminal.

The configuration information of the synchronization signal contained in the first information and the related processing by the terminal device are illustrated in detail as follows.

The configuration information of the synchronization signal may include one or more of the following: a transmitting period of the synchronization signal; time domain resource location information of the synchronization signal; frequency domain resource location information of the synchronization signal; an antenna port of the synchronization signal; and a transmitting beam of the synchronization signal.

Herein, the synchronization signal may specifically include one or more of the following: SSB (Synchronization Signal Block) and other reference signals. The other reference signals may include: a TRS (Time Reference Signal) and/or a CSI-RS (Channel-State Information Reference Signal).

The transmitting period of the synchronization signal may be smaller than an original transmitting period of the synchronization signal in the current system, that is, the synchronization signal may be transmitted in denser (more frequently). The transmitting period of the synchronization signal may be specifically configured according to the actual situations, for example, the transmitting period of the synchronization signal may be 1ms, 2ms or longer or shorter, which is not exhaustively listed herein.

Optionally, the time domain resource location information of the synchronization signal may include one or more of: a time domain location of a time domain resource of the synchronization signal; and a duration of the time domain resource of the synchronization signal. A time unit of the time domain location of the time domain resource of the synchronization signal may be any one of slot, symbol, frame, subframe, millisecond, etc.

The time domain location of the time domain resource of the synchronization signal may include: a time domain starting location of the time domain resource of the synchronization signal, and/or a time domain ending location of the time domain resource of the synchronization signal.

For example, the time domain resource location information of the synchronization signal directly includes the time domain resource location of the synchronization signal. Herein, the time domain location of the time domain resource of the synchronization signal includes: the time domain starting location of the time domain resource of the synchronization signal, and the time domain ending location of the time domain resource of the synchronization signal.

The terminal device may directly determine a time domain range (or time domain location) of the synchronization signal based on the time domain starting location of the time domain resource of the synchronization signal and the time domain ending location of the time domain resource of the synchronization signal in the time domain location of the time domain resource of the synchronization signal.

For example, the time domain resource location information of the synchronization signal directly includes the time domain resource location of the synchronization signal and the duration of the time domain resource of the synchronization signal. Herein, the time domain location of the time domain resource of the synchronization signal includes: the time domain starting location of the time domain resource of the synchronization signal, or the time domain ending location of the time domain resource of the synchronization signal.

The terminal device may determine the time domain ending location of the time domain resource of the synchronization signal based on the time domain starting location of the synchronization signal and the duration of the time domain resource of the synchronization signal; and determine the time domain range of the synchronization signal based on the time domain starting location of the time domain resource of the synchronization signal and the time domain ending location of the time domain resource of the synchronization signal.

Optionally, the time domain resource location information of the synchronization signal includes one or more of the following: a second time domain offset, where the second time domain offset is used to represent an offset between a reception time of the WUS and the time domain location of the time domain resource of the synchronization signal; and the duration of the time domain resource of the synchronization signal.

The time domain location of the time domain resource of the synchronization signal may include: the time domain starting location of the time domain resource of the synchronization signal, and/or the time domain ending location of the time domain resource of the synchronization signal.

Since the WUS may occupy a period of the time domain resource, in this embodiment, a time (or a moment) in the period of the time domain resource occupied by the WUS may be designated as the reception time of the WUS. The reception time of the WUS may include: a starting reception time of the WUS, or a reception completion time of the WUS. It should be understood that the reception time of the WUS may also be other time in the time domain resource occupied by the WUS, such as a midpoint time of the time domain resource occupied by the WUS, etc., as long as the terminal device and the network device both use the same reception time of the WUS.

The second time domain offset may include one numerical value or multiple numerical values.

For example, the second time domain offset includes one numerical value, such as a seventh numerical value; the seventh numerical value is used to represent an offset between the reception time of the WUS and the time domain starting location of the time domain resource of the synchronization signal; or the seventh numerical value is used to represent an offset between the reception time of the WUS and the time domain ending location of the time domain resource of the synchronization signal. A unit of the second time domain offset may be at least one of slot, symbol, frame, subframe, millisecond, etc. In this implementation, the time domain resource location information of the synchronization signal may further include: the duration of the time domain resource of the synchronization signal.

The terminal device may determine the time domain starting location of the time domain resource of the synchronization signal as a location after the starting recption time of the WUS with a delay of the second time domain offset; based on the time domain starting location of the time domain resource of the aforementioned synchronization signal plus the duration of the time domain resource of the synchronization signal, the time domain ending location of the time domain resource of the synchronization signal is obtained; and a range between the time domain starting location and the time domain ending location of the time domain resource of the synchronization signal is designated as a specific location of the time domain resource of the synchronization signal.

For example, the second time domain offset may include multiple numerical values, such as two numerical values, which respectively are an eighth numerical value and a ninth numerical value. The eighth value is used to represent an offset between the reception time of the WUS and the time domain starting location of the time domain resource of the synchronization signal; and the ninth value is used to represent an offset between the reception time of the WUS and the time domain ending location of the time domain resource of the synchronization signal. The unit of the second time domain offset may be at least one of slot, symbol, frame, subframe, millisecond, etc. Herein, the eighth numerical value is smaller than the ninth numerical value.

The terminal device may determine the time domain starting location of the time domain resource of the synchronization signal as a location after the starting reception time of the WUS with a delay of the eighth numerical value; determine the time domain ending location of the time domain resource of the synchronization signal as a location after the starting reception time of the WUS with a delay of the ninth numerical value; and a range between the time domain starting location and the time domain ending location of the time domain resource of the synchronization signal is designated as the specific location of the time domain resource of the synchronization signal.

Optionally, the frequency domain resource location information of the synchronization signal includes one or more of the following: a location of a second-type frequency point of a frequency domain resource of the synchronization signal; and a size of the frequency domain resource of the synchronization signal.

The second-type frequency point of the frequency domain resource of the synchronization signal includes one or more of the following: a lowest frequency point of the frequency domain resource of the synchronization signal; a highest frequency point of the frequency domain resource of the synchronization signal; and a central frequency point of the frequency domain resource of the synchronization signal. A specific location of the second-type frequency point may also vary according to different actual situations, as long as the terminal device and the network device both determine to use the same reference frequency point in advance.

For example, the location of the second-type frequency point of the frequency domain resource of the synchronization signal includes the lowest frequency point of the frequency domain resource of the synchronization signal and the highest frequency point of the frequency domain resource of the synchronization signal. Accordingly, the terminal device may directly designate a frequency domain range between the lowest frequency point and the highest frequency point of the frequency domain resource of the synchronization signal as the frequency domain range of the synchronization signal. For example, the location of the second-type frequency point of the frequency domain resource of the synchronization signal may include only one frequency point; and then the frequency domain resource location information of the synchronization signal may also include the size of the frequency domain resource of the synchronization signal. For example, the location of the second-type frequency point of the frequency domain resource of the synchronization signal is only the central frequency point. The terminal device may determine the frequency domain range of the synchronization signal based on the location of the central frequency point of the frequency domain resource of the synchronization signal and the size of the frequency domain resource of the synchronization signal. The frequency domain range refers to a range between the lowest frequency point of the synchronization signal and the highest frequency point of the synchronization signal.

Optionally, the frequency domain resource location information of the synchronization signal includes one or more of the following: the second frequency domain offset, where the second time domain offset is used to represent an offset between the frequency domain location of the WUS and the second-type frequency point of the frequency domain resource of the synchronization signal; and the size of the frequency domain resource of the synchronization signal.

The unit of the second frequency domain offset may be any one of PRB, RB, Khz, and Mhz.

Similarly, the second-type frequency point of the frequency domain resource of the synchronization signal includes one or more of the following: the lowest frequency point of the frequency domain resource of the synchronization signal; the highest frequency point of the frequency domain resource of the synchronization signal; and the central frequency point of the frequency domain resource of the synchronization signal.

The frequency domain location of the WUS include one of the following: a lowest frequency point in the frequency domain resource occupied by the WUS; a highest frequency point in the frequency domain resource occupied by the WUS; or a central frequency point in the frequency domain resource occupied by the WUS.

The unit of the second frequency domain offset may be any one of PRB, RB, Khz, Mhz, etc. The second frequency domain offset may include one or more numerical values.

In a possible implementation, the second frequency domain offset includes one numerical value, which is referred to as a tenth numerical value. The second frequency domain offset value (i.e., the tenth value) may be used to represent a relative frequency domain offset between the second-type frequency point of the frequency domain resource of the synchronization signal and a frequency domain location of the WUS. In this implementation, the frequency domain resource location information of the synchronization signal may further include: the size of the frequency domain resource of the synchronization signal.

For example, taking the second-type frequency point of the frequency domain resource of the synchronization signal being the lowest frequency point and the frequency domain location of the WUS being the central frequency point in the frequency domain resource occupied by the WUS as an example, in a case where the terminal device monitors the WUS, the location of the lowest frequency point of the frequency domain resource of the synchronization signal is obtained based on the location of the central frequency point in the frequency domain resource occupied by the WUS by increasing (or reducing) the tenth numerical value. The terminal device may obtain the location of the highest frequency point of the frequency domain resource of the synchronization signal based on the location of the lowest frequency point of the frequency domain resource of the synchronization signal plus the size of the frequency domain resource of the synchronization signal; and a range between the highest frequency point and the lowest frequency point of the frequency domain resource of the synchronization signal is designated as the specific range of the frequency domain resource of the synchronization signal. As another example, taking the second-type frequency point of the frequency domain resource of the synchronization signal being the central frequency point and the frequency domain location of the WUS being the highest frequency point in the frequency domain resource occupied by the WUS as an example, in a case where the terminal device monitors the WUS, the location of the central frequency point of the frequency domain resource of the synchronization signal is obtained based on the location of the highest frequency point in the frequency domain resource occupied by the WUS by increasing (or reducing) the fourth numerical value. The terminal device may obtain the location of the highest frequency point of the frequency domain resource of the synchronization signal based on the location of the central frequency point of the frequency domain resource of the synchronization signal plus 1/2 of the size of the frequency domain resource of the synchronization signal, obtain the location of the lowest frequency point of the frequency domain resource of the synchronization signal based on the location of the central frequency point of the frequency domain resource of the synchronization signal minus 1/2 of the size of the frequency domain resource of the synchronization signal, and designate a range between the highest frequency point and the lowest frequency point of the frequency domain resource of the synchronization signal as a specific range of the frequency domain resource of the synchronization signal.

In a possible implementation, the second frequency domain offset includes two numerical values, which respectively an eleventh numerical value and a twelfth numerical value. The eleventh numerical value may be used to represent a relative frequency domain offset between one second-type frequency point of the frequency domain resource of the synchronization signal and one frequency domain location of the WUS; and the twelfth numerical value is used to represent a relative frequency domain offset between another second-type frequency point of the frequency domain resource of the synchronization signal and one frequency domain location of the WUS. In this implementation, the frequency domain resource location information of the synchronization signal may not include the size of the frequency domain resource of the first PRACH.

For example, taking the one second-type frequency point of the frequency domain resource of the synchronization signal being the lowest frequency point, another second-type frequency point being the highest frequency point, and the one frequency domain location of the WUS being the central frequency point in the frequency domain resource occupied by the WUS as an example, in a case where the terminal device monitors the WUS, the location of the lowest frequency point of the frequency domain resource of the synchronization signal is obatined based on the location of the central frequency point in the frequency domain resource occupied by the WUS by reducing the eleventh numerical value; the location of the highest frequency point of the frequency domain resource of the synchronization signal is obtained based on the location of the central frequency point in the frequency domain resource occupied by the WUS by increasing the twelfth numerical value. A range between the highest frequency point and the lowest frequency point of the frequency domain resource of the synchronization signal is designated as the specific range of the frequency domain resource of the synchronization signal.

In this implementation, the terminal device may determine the frequency domain resource location of the synchronization signal based on the second frequency domain offset, and determine the frequency domain range of the synchronization signal based on the frequency domain resource location of the synchronization signal. Specifically, the terminal device determines a location of a reference frequency point of the frequency domain resource of the synchronization signal based on the second frequency domain offset and the frequency domain location of the WUS, and determines the frequency domain range of the synchronization signal based on the location of the reference frequency point of the synchronization signal. For example, the terminal device obtains the location of the reference frequency point (e.g., the lowest frequency point) of the frequency domain resource of the synchronization signal based on the frequency domain location (e.g., the highest frequency point) of the WUS by increasing or reducing the second frequency domain offset, and then determines the frequency domain range of the synchronization signal based on the location of the reference frequency point (e.g., the lowest frequency point) of the synchronization signal and a preset size of the frequency domain resource of the synchronization signal. Of course, there may be other examples of determining the frequency domain range of the synchronization signal, which are not exhaustively listed herein.

The antenna port of the synchronization signal and the transmitting beam of the synchronization signal may be determined by the network device based on the actual situations of transmission, which are not limited herein.

It should also be pointed out that the configuration information of the aforementioned synchronization signal may include all of the above contents, or may only include a portion of the above contents. In the case where the configuration information of the synchronization signal only includes a portion of the above contents, the configuration information of the synchronization signal may include third configuration information and fourth configuration information, or the configuration information of the synchronization signal may include the transmitting period of the synchronization signal and the fourth configuration information, etc., which are not exhaustively listed herein.

Furthermore, the method may also include: determining, by the terminal device, the synchronization signal based on the configuration information of the synchronization signal; and performing, by the terminal device, the time-frequency synchronization based on the synchronization signal. In addition, the method may also include: performing, by the terminal device, the random access in a case where the time-frequency synchronization is completed. The aforementioned time-frequency synchronization may specifically refer to the terminal device and the network device completing downlink time-frequency synchronization.

Optionally, the configuration information of the aforementioned synchronization signal is specifically used to configure the terminal device that conforms to the UE identifier. Therefore, the WUS may also carry the UE identifier, which is a UE ID, a UE group ID, or a cell ID. Alternatively, the WUS may also carry a bitmap. The processing method for the terminal device to determine whether the terminal device itself is the terminal device that conforms to the UE identifier based on the UE identifier (or bitmap) carried in the WUS has been described in the previous embodiments and will not be repeated herein.

Optionally, the configuration information of the synchronization signal is specifically used to configure the terminal device that conforms to the UE identifier. That is, in a case where the terminal device determines that the terminal device itself is the terminal device that conforms to the UE identifier based on the UE identifier contained in the WUS, the second component of the terminal device determines the synchronization signal based on the configuration information of the synchronization signal; and performs the time-frequency synchronization based on the synchronization signal.

Alternatively, the configuration information of the synchronization signal may further include a new UE identifier, and the new UE identifier may also be one of: a new UE ID, a new UE group ID, and a new cell ID. Correspondingly, in a case where the terminal device determines that the terminal device itself is the terminal device that conforms to the UE identifier based on the UE identifier contained in the WUS, the second component may be woken up based on the WUS; in a case where the terminal device determines that the terminal device itself is the terminal device that conforms to the new UE identifier based on the new UE identifier contained in the configuration information of the synchronization signal, the second component of the terminal device determines the synchronization signal based on the configuration information of the synchronization signal; and performs the time-frequency synchronization based on the synchronization signal. In addition, the method may also include: in a case where the terminal device is determined that the terminal device itself does not conform to the new UE identifier based on the new UE identifier contained in the configuration information of the target initial BWP, the second component of the terminal device does not determine the synchronization signal based on the configuration information of the synchronization signal.

The aforementioned configuration information of the synchronization signal is mainly used for the second component (also referred to as the main receiver) of the terminal device to transmit and receive data after the terminal device (the second component of the terminal device) is woken up. Usually, before the terminal device transmits or receives data with the network device, the main receiver of the terminal device needs to obtain the time-frequency synchronization using the synchronization signal. In order to optimize the time-frequency synchronization process of the terminal, in addition to the synchronization signal (e.g., SSB signal) transmitted normally by the network, synchronization signals (such as SSB signal) may additonally be transmitted in denser, or other reference signals (e.g., TRS, or CSI-RS) may be transmitted additionally, so that the terminal may receive more synchronization signals in a short time, which is used to speed up the terminal to complete the time-frequency synchronization process.

Finally, it should be noted that in a case where the contents contained in the first information are different, the processing performed by the terminal device may also be different. In the above embodiments, the relevant processings performed by the terminal device are illustrated for a case where the first information respectively contains the configuration information of the first PRACH resource, the configuration information of the target initial BWP, and the configuration information of the synchronization signal. In the actual processing, the first information may also include two or all of the above information, and the processings performed by the terminal device may also be adjusted accordingly, which are illustrated below by examples.

In a first example, the first information includes the configuration information of the target initial BWP and the configuration information of the synchronization signal.

The terminal device determines the target initial BWP based on the configuration information of the target initial BWP, and in a case where the time-frequency synchronization is completed based on the configuration information of the synchronization signal, the terminal device performs the initial access on the target initial BWP.

In a second example, the first information includes the configuration information of the first PRACH resource and the configuration information of the synchronization signal.

The terminal device determines the first PRACH resource based on the configuration information of the first PRACH resource, and in a case where the time-frequency synchronization is completed based on the configuration information of the synchronization signal, the terminal device performs the random access on the first PRACH resource (specifically may initiate a random access request on the first PRACH resource).

In a third example, the first information includes the configuration information of the first PRACH resource, the configuration information of the target initial BWP, and the configuration information of the synchronization signal.

The terminal device determines the target initial BWP based on the configuration information of the target initial BWP, determines the first PRACH resource on the target initial BWP based on the configuration information of the first PRACH resource, and determines the synchronization signal based on the configuration information of the synchronization signal. In a case where the time-frequency synchronization is completed based on the synchronization signal, the terminal device initiates the random access request on the first PRACH resource, and performs the subsequent random access processing in the initial access on the target initial BWP.

It can be seen that by adopting the above solution, the terminal device may monitor the WUS, and the WUS may be used to wake up the terminal device. The first information carried in the WUS may be used for operations performed by the terminal device after being woken up. In this way, the terminal device may be woken up based on a reception of the WUS and may perform the operations after being woken up in a timely manner based on the first information in the WUS, thereby shortening a latency of the traffic transmission and improving the processing efficiency of the system.

FIG. 6 is a schematic flowchart of a communication method according to the embodiments of the second aspect of the present application. The method can optionally be applied to the system shown in FIG. 1, but is not limited hereto. The method includes at least a portion of the following.

S610, the network device transmits the wake-up signal (WUS), where the WUS is used to wake up the terminal device; the WUS carries the first information, and the first information is used for an operation performed by the terminal device after being woken up.

The aforementioned WUS may also be referred to as a low-power consumption WUS, or may be referred to as other names.

The network device transmitting the wake-up signal (WUS) may include: transmitting, by the network device, the WUS to the terminal device in a case where the network device receiving first notification information transmitted by a device of the core network. The first notification information may be used to notify the network device to transmit the WUS to the terminal device. Determining whether the terminal device currently needs to perform the traffic transmission may be performed by the device of the core network. For example, in a case where the device of the core network determining that the terminal device is called, the core network device may determine that the terminal device currently needs to perform the traffic transmission (or needs to perform a transmission of traffic data). Of course, determining whether the terminal device currently needs to perform the traffic transmission may also include other determination methods, which are not exhaustively listed in this embodiment. Furthermore, in a case where the device of the core network determining that the terminal device needs to perform the traffic transmission, the first notification information may be transmitted to the network device.

The WUS is exclusive to the UE; or the WUS is shared for a UE group, and the UE group may be a UE group including the terminal device; or the WUS is dedicated to a cell, and the cell may be a serving cell where the terminal device is located. Therefore, the WUS may also include: a UE identifier, where the UE identifier is a UE ID or a UE group UD or a cell ID. It needs to be pointed out that, the UE identifier may be contained in the first information in the WUS, or the UE identifier may not be contained in the first information in the WUS. The specific information about a location of the UE identifier in the WUS is not limited in this embodiment.

Herein, the UE ID may refer to an identifier of the terminal device, which may be a unique identifier of the terminal device, for example, the UE ID may be any one of the following: a Temporary Mobile Subscriber Identity (TMSI), an International Mobile Subscriber Identity (IMSI), and an I-RNTI (Inactive Radio Network Temporary Identifier). The UE group may be composed of one or more terminal devices; one or more UE groups may be configured in the system, and different IDs are allocated to different UE groups in the one or more UE groups in the system to uniquely distinguish the different UE groups. The cell ID may be one or more IDs corresponding to one or more cells contained in the system, respectively. The WUS is specifically used to wake up the terminal device that conforms to the UE identifier.

Optionally, the UE identifier may be replaced with a bitmap. A value of a bit in the bitmap may be used to indicate whether to wake up a corresponding terminal device or a UE group. For example, a first value indicates to wake up the terminal device, and a second value indicates not to wake up the terminal device or the UE group. The first value is different from the second value, for example, the first value is 1 and the second value is 0, or vice versa.

In addition to being used to wake up the terminal device, the WUS may also carry the aforementioned first information, where the first information is used for an operation performed by the terminal device after being woken up. Exemplarily, the operation performed by the terminal device after being woken up may include one or more of the following: random access, initial access, and time-frequency synchronization.

Specifically, the first information may include one or more information of the following: information for performing the random access, where the information for performing the random access is configuration information of a first PRACH (Physical Random Access Channel) resource; information for performing the initial access, where the information for performing the initial access is configuration information of a target initial BWP (BandWidth Part) resource; and information for performing the time-frequency synchronization, where the information for performing the time-frequency synchronization is configuration information of a synchronization signal.

The configuration information of the first PRACH resource may include one or more of the following: time domain resource location information of the first PRACH; frequency domain resource location information of the first PRACH; a period of the first PRACH; a slot of the first PRACH; a subcarrier spacing of the first PRACH; a number of first PRACH occasions; a mapping relationship between the first PRACH and a synchronization signal block (SSB); time domain resource location information of a first PRACH occasion; frequency domain resource location information of the first PRACH occasion; and a preamble index number.

Herein, time domain resource information of the first PRACH is described in following two cases.

In one case, the time domain resource information of the first PRACH may include an absolute time domain location of the time domain resource of the first PRACH. Specifically:
the time domain resource information of the first PRACH includes one or more of the following: a time domain location of a time domain resource of the first PRACH; and a duration of the time domain resource of the first PRACH.

Herein, the time domain location of a time domain resource of the first PRACH includes: a time domain starting location of the time domain resource of the first PRACH, or a time domain ending location of the time domain resource of the first PRACH.

The duration of the time domain resource of the first PRACH may refer to a length in the time domain occupied by the first PRACH resource.

In one implementation, the time domain resource location information of the first PRACH specifically includes: the time domain starting location of the time domain resource of the first PRACH and the duration of the time domain resource of the first PRACH. The time domain starting location of the time domain resource of the first PRACH and the duration of the time domain resource of the first PRACH may be expressed in a unit of any one of symbol, slot, subframe, millisecond, microsecond, etc.

In yet another implementation, the time domain resource location information of the first PRACH specifically includes: the time domain starting location of the time domain resource of the first PRACH and the time domain ending location of the time domain resource of the first PRACH. The time domain starting location of the time domain resource of the first PRACH and the time domain ending location of the time domain resource of the first PRACH may be expressed in a unit of any one of symbol, slot, a subframe, millisecond, microsecond, etc.

In another case, the time domain resource information of the first PRACH may include a relative time domain location of the time domain resource of the first PRACH. Specifically: the time domain resource location information of the first PRACH includes one or more of the following: a first time domain offset, where the first time domain offset is used to represent an offset between a reception time of the WUS and a time domain location of a time domain resource of the first PRACH; and a duration of the time domain resource of the first PRACH.

The duration of the time domain resource of the first PRACH may refer to a length in the time domain occupied by the first PRACH resource. Any one of slot, symbol, subframe, millisecond, etc., may be used as a unit for the duration.

Since the WUS may occupy a period of the time domain resource, in this embodiment, a time (or a moment) in the period of the time domain resource occupied by the WUS may be designated as the reception time of the WUS. For example, the reception time of the WUS may include: a starting reception time of the WUS, or a reception completion time of the WUS. It should be understood that the reception time of the WUS may also be other time in the time domain resource occupied by the WUS, such as a midpoint time of the time domain resource occupied by the WUS, etc., as long as the terminal device and the network device both use the same reception time of the WUS.

Similarly, the time domain resource of the first PRACH may also occupy a period of the time domain resource, and a time (or a moment) in the time domain resource of the first PRACH may be designated as the time domain location of the time domain resource of the first PRACH. For example, the time domain location of the time domain resource of the first PRACH includes: a time domain starting location of the time domain resource of the first PRACH, and/or a time domain ending location of the time domain resource of the first PRACH. It should be understood that the time domain location of the time domain resource of the first PRACH may also be other time in the time domain resource of the first PRACH, such as a midpoint time of the time domain resource of the first PRACH, etc., as long as the terminal device and the network device both use the same time domain location of the time domain resource of the first PRACH.

The first time domain offset may include one numerical value or multiple numerical values. A unit of the first time domain offset may be any one of symbol, slot, subframe, millisecond, microsecond, etc.

In a possible implementation, the first time domain offset includes one numerical value, which is referred to as a first numerical value. The first numerical value may be used to represent a relative time offset between the time domain starting location of the time domain resource of the first PRACH and the reception time of the WUS (such as the starting reception time of the WUS); or, the value of the offset may be used to indicate a relative time offset between the time domain ending location of the time domain resource of the first PRACH and the reception time of the WUS (such as the starting reception time of the WUS). In this implementation, the time domain resource location information of the first PRACH may also include: the duration of the time domain resource of the first PRACH. The terminal device may determine a specific location of the time domain resource of the first PRACH based on the time domain starting location (or time domain ending location) of the time domain resource of the aforementioned first PRACH and the duration of the time domain resource of the first PRACH.

In a possible implementation, when the first time domain offset includes two numerical values, for example, the two numerical values are respectively represented as a second numerical value and a third numerical value; where the second numerical value may be used to represent a relative time offset between the time domain starting location of the time domain resource of the first PRACH and the reception time of the WUS (such as the starting reception time of the WUS); the third numerical value may represent a relative time offset between the time domain ending location of the time domain resource of the first PRACH and the reception time of the WUS (such as the starting reception time of the WUS). Herein, the second numerical value is smaller than the third numerical value. A unit of the first time domain offset (i.e., two values of the offset or multiple values of the offset) may be any one of symbol, slot, subframe, millisecond, microsecond, etc. It should be understood that in this embodiment, the reception ending time of the WUS may also be replaced with the starting reception time of the WUS or other time of the WUS, as long as the network device and the terminal device use the same time. No more exhaustive list is given herein.

When the first time domain offset includes two or more numerical values, the time domain resource location information of the first PRACH may not include the duration of the time domain resource of the first PRACH.

The frequency domain resource location information of the first PRACH may also be described in following two cases.

In one case, the frequency domain resource location information of the first PRACH is an absolute frequency domain location.

The frequency domain resource location information of the first PRACH includes one or more of the following: a location of a first-type frequency point of a frequency domain resource of the first PRACH; and a size of the frequency domain resource of the first PRACH.

The first-type frequency point may be expressed in a unit of any one of PRB (physical resource block), RB (resource block), Khz, Mhz, etc. A number of the specified frequency points may be one or more.

The first-type frequency point of the frequency domain resource of the first PRACH includes one or more of the following: a lowest frequency point of the frequency domain resource of the first PRACH; a highest frequency point of the frequency domain resource of the first PRACH; and a central frequency point of the frequency domain resource of the first PRACH. It should be understood that the description herein is only for examplary illustration, and when actually performing the processing, the first-type frequency point may also be other frequency points. As long as the terminal device and the network device have the same definition or interpretation for the specified frequency point, they are all within the protection scope of this embodiment and are not listed exhaustively herein.

In a possible implementation, the frequency domain resource location information of the first PRACH may only include a location of the first-type frequency point of the frequency domain resource of the first PRACH. At this time, the first-type frequency point of the frequency domain resource of the first PRACH may be multiple frequency points. For example, the frequency domain resource location information of the first PRACH includes locations of the lowest frequency point and the central frequency point of the frequency domain resource of the first PRACH; or the frequency domain resource location information of the first PRACH includes locations of the lowest frequency point and the highest frequency point of the frequency domain resource of the first PRACH.

In a possible implementation, the frequency domain resource location information of the first PRACH may include the location of the first-type frequency point of the frequency domain resource of the first PRACH and the size of the frequency domain resource of the first PRACH. At this time, the first-type frequency point of the frequency domain resource of the first PRACH may be one frequency point.

In another case, the frequency domain resource location information of the first PRACH is a relative frequency domain location.

The frequency domain resource location information of the first PRACH includes one or more of the following: a first frequency domain offset, where the first frequency domain offset is used to represent an offset between a frequency domain location of the WUS and a first-type frequency point of a frequency domain resource of the first PRACH; and a size of the frequency domain resource of the first PRACH.

The frequency domain location of the WUS include one of the following: a lowest frequency point in the frequency domain resource occupied by the WUS; a highest frequency point in the frequency domain resource occupied by the WUS; or a central frequency point in the frequency domain resource occupied by the WUS. It should be understood that the frequency domain location of the WUS may also be represented by other frequency points of the WUS, as long as the terminal device and the network device use the same frequency point, which is within the protection scope of this embodiment, and is not exhaustively listed herein.

The first-type frequency point of the frequency domain resource of the first PRACH includes one or more of the following: a lowest frequency point of the frequency domain resource of the first PRACH; a highest frequency point of the frequency domain resource of the first PRACH; and a central frequency point of the frequency domain resource of the first PRACH. It should be understood that the description herein is only for examplary illustration, and when actually performing the processing, the first-type frequency point may also be other frequency points. As long as the terminal device and the network device have the same definition or interpretation for the first-type frequency point, they are all within the protection scope of this embodiment and are not listed exhaustively herein.

Herein, the size of the frequency domain resource of the first PRACH may be included in the frequency domain resource location information of the first PRACH; or the size of the frequency domain resource of the first PRACH may be pre-acquired by the terminal device. For example, the size of the frequency domain resource of the first PRACH may be transmitted to the terminal device by the network device via any one of DCI, a RRC signaling, and a system message when the terminal device was in an RRC connected state last time.

A unit of the first frequency domain offset may be any one of PRB, RB, Khz, Mhz, etc. The first frequency domain offset may include one or more numerical values.

In a possible implementation, when the first frequency domain offset includes a numerical value, the numerical value is referred to as a fourth numerical value. The first frequency domain offset value (i.e., the fourth numerical value) may be used to represent a relative frequency domain offset between one first-type frequency point of the frequency domain resource of the first PRACH and one frequency domain location of the WUS. In this implementation, the frequency domain resource location information of the first PRACH may also include: the size of the frequency domain resource of the first PRACH.

In a possible implementation, the first frequency domain offset includes two numerical values, which respectively are a fifth numerical value and a sixth numerical value; where the fifth numerical value may be used to represent a relative frequency domain offset between one first-type frequency point of the frequency domain resource of the first PRACH and one frequency domain location of the WUS; and the sixth numerical value is used to represent a relative frequency domain offset between another first-type frequency point of the frequency domain resource of the first PRACH and one frequency domain location of the WUS. In this implementation, the frequency domain resource location information of the first PRACH may not include the size of the frequency domain resource of the first PRACH.

In general, the time domain resource location information of the aforementioned first PRACH is used to determine the range of the time domain resource (or time domain location) of the first PRACH resource, and the frequency domain resource location information of the aforementioned first PRACH is used to determine the range of the frequency domain resource (or frequency domain range) of the first PRACH resource. The range of the time domain resource and the range of the frequency domain resource of the aforementioned first PRACH resource may refer to a location (or a total range) of a time-frequency resource used for the random access. In the actual processing, within the range of the time domain resource and range of the frequency domain resource of the first PRACH resource, there may be a first PRACH occasion (or referred to as a PRACH occasion in the first PRACH resource) with a finer granularity.

The finer granularity may refer to that within the range of the time domain resource and range of the frequency domain resource of the first PRACH resource, there are time domain resources and frequency domain resources respectively corresponding to one or more first PRACH occasions. In other words, a duration of any first PRACH occasion is shorter than the duration of the time domain resource of the aforementioned first PRACH, and/or a size of the frequency domain range of any first PRACH occasion is smaller than the size of the frequency domain resource of the aforementioned first PRACH.

A number of the first PRACH occasions may be configured according to the actual situations, and the number of the first PRACH occasions may specifically include one or more of the following: a total number of first PRACH occasions contained in the first PRACH resource (i.e., within the range of the time domain resource and the range of the frequency domain resource of the first PRACH); a number of first PRACH occasions contained in the time domain resource of the first PRACH; and a number of first PRACH occasions contained in the frequency domain resource of the first PRACH.

It should be understood that the total number of first PRACH occasions contained in the first PRACH resource is greater than or equal to the number of first PRACH occasions contained in the time domain resource of the first PRACH; or the total number of first PRACH occasions contained in the first PRACH resource is greater than or equal to the number of first PRACH occasions contained in the frequency domain resource of the first PRACH.

As mentioned above, the number of the first PRACH occasions may be one or more. The description for a time-frequency location of a first PRACH occasion in the following embodiment may be understood as the description for a time-frequency location of any one of the one or more first PRACH occasions. The descriptions for the time-frequency locations of the first PRACH occasions are the same as each other, and are not repeated herein.

The time domain resource location information of the first PRACH occasion may include one or more of the following: a time domain starting location of the first PRACH occasion, a time domain ending location of the first PRACH occasion, and a duration of the first PRACH occasion. Herein, the duration of the first PRACH occasion is shorter than the duration of the time domain resource of the aforementioned first PRACH.

The time domain starting location/time domain ending location of the first PRACH occasion may be expressed in a unit of any one of slot, symbol, subframe, millisecond, etc.

In a possible implementation, the time domain resource location information of the first PRACH occasion includes the time domain starting location of the first PRACH occasion and the time domain ending location of the first PRACH occasion.

In another possible implementation, the time domain resource location information of the first PRACH occasion includes the time domain starting location of the first PRACH occasion and the duration of the first PRACH occasion. The frequency domain resource location information of the first PRACH occasion may include one or more of the following: a location of a lowest frequency point of the first PRACH occasion, a location of a highest frequency point of the first PRACH occasion, a location of a central frequency point of the first PRACH occasion, and a size of a frequency domain range of the first PRACH occasion. Herein, the size of the frequency domain range of the first PRACH occasion is smaller than the size of the frequency domain resource of the first PRACH. The location of the lowest frequency point, the location of the central frequency point, and the location of the highest frequency point of the first PRACH occasion may be in a unit of any one of PRB, RB, Khz, and Mhz.

In a possible implementation, the frequency domain resource location information of the first PRACH occasion includes the location of the lowest frequency point of the first PRACH occasion and the location of the highest frequency point of the first PRACH occasion. The terminal device may determine a range of the frequency domain resource of the first PRACH occasion based on the location of the lowest frequency point of the first PRACH occasion and the location of the highest frequency point of the first PRACH occasion.

In another possible implementation, the frequency domain resource location information of the first PRACH occasion includes the location of the lowest frequency point of the first PRACH occasion and the size of the frequency domain range of the first PRACH occasion. Based on the location of the lowest frequency point of the first PRACH occasion and the size of the frequency domain range of the first PRACH occasion, the range of the frequency domain resource of the first PRACH occasion may be determined.

In yet another possible implementation, the frequency domain resource location information of the first PRACH occasion includes the location of the central frequency point of the first PRACH occasion and the size of the frequency domain range of the first PRACH occasion. Based on the location of the central frequency point of the first PRACH occasion, and the size of the frequency domain range of the first PRACH occasion, the range of the frequency domain resource of the first PRACH occasion may be determined.

A mapping relationship between the first PRACH and the synchronization signal block (SSB) may specifically refer to a mapping relationship between a PRACH occasion and the SSB. More specifically, the mapping relationship between the first PRACH and the SSB may refer to: a mapping relationship between an SSB number and the PRACH occasion. Through the mapping relationship between the first PRACH and the SSB, the terminal device may determine a slot of the first PRACH.

The preamble index number may specifically refer to a preamble index number used by the terminal device this time. In the entire system, each first PRACH occasion may correspond to multiple pre-configured preambles (for example, there may be 64 preambles) and corresponding index numbers. The network device may indicate a preamble index number used this time via the configuration information of the first PRACH resource.

The period of the first PRACH may refer to a length of each period of the first PRACH. A unit of the period may be slot, symbol, subframe, microsecond, millisecond, etc. It should be pointed out that after determining the first PRACH resource in a first period based on the time domain resource location information of the first PRACH and the frequency domain resource location information of the first PRACH, the one or more periods may be determined based on the period of the first PRACH, and a first PRACH resource in each of one or more periods may be determined.

The slot of the first PRACH may refer to a transmitting slot of the first PRACH, or may be referred to as a transmitting slot for transmitting a random access preamble via the first PRACH. It should be understood that, in a case where the time domain resource location information of the first PRACH and the mapping relationship between the first PRACH and the SSB are configured in the configuration information of the first PRACH resource, the configuration information of the first PRACH resource may not include the slot of the first PRACH. Alternatively, in a case where the time domain resource location information of the first PRACH and the mapping relationship between the first PRACH and the SSB are not configured in the configuration information of the first PRACH resource, the configuration information of the first PRACH resource may include the slot of the first PRACH.

The subcarrier spacing of the first PRACH may refer to a subcarrier spacing used in the frequency domain resource of the first PRACH. The subcarrier spacing of the first PRACH may be the same as a subcarrier spacing of the current system. Alternatively, the subcarrier spacing of the first PRACH may be set according to the actual situations, for example, the subcarrier spacing of the first PRACH may be 15 kHz, 30 kHz, 60 kHz, 120 kHz, 240 kHz, etc., which are not exhaustively listed herein.

It should be understood that the first information carried by the WUS received by the terminal device may include one or more specific contents of the configuration information of the aforementioned first PRACH resource.

Before the network device transmitting the WUS, the method further includes: configuring, by the network device, configuration information of a second PRACH resource for the terminal device; where the configuration information of the second PRACH resource is different from the configuration information of the first PRACH resource.

The configuration information of the second PRACH resource is used to determine the second PRACH resource for performing the random access; and a time domain resource location of the second PRACH resource is different from a time domain resource location of the first PRACH resource.

Specifically, the configuration information of the second PRACH resource is used to determine the second PRACH resource. Contents that may be carried in the configuration information of the second PRACH resource includes, but is not limited to: a time domain resource location of the second PRACH (e.g., at least one of a starting location, a ending location, and a duration), a frequency domain resource location of the second PRACH (e.g., at least one of a size of the frequency domain resource, a lowest frequency point, a highest frequency point, and a central frequency point), locations and numbers of second PRACH occasions, etc.

The time domain resource location of the second PRACH resource determined based on the configuration information of the second PRACH resource is at least different from the time domain resource location of the first PRACH resource. Specifically, the second PRACH resource may be an original PRACH resource configured by the current system. For example, a period of the second PRACH resource configured by the system for the terminal device is relatively large (e.g., 20ms), that is, the period of the second PRACH resource may be greater than the period of the first PRACH resource; and/or a time domain starting location of the second PRACH resource is later than the time domain starting location of the first PRACH resource. This is because a device (e.g., a MME) of the core network determines that a certain terminal device in the idle state (or inactive state) currently needs to perform the traffic transmission; the device of the core network may notify the network device to transmit the WUS to the terminal device which is in the idle state (or inactive state). Accordingly, the network device transmits the WUS to the terminal device which is in the idle state (or inactive state). In this case, the terminal device in the idle state is expected to perform the random access as soon as possible or in a timely manner, so that the terminal device may perform subsequent processing as soon as possible. However, the period of the second PRACH resource configured by the system for the terminal device is relatively large. In a case where the terminal device is in the idle state, if the terminal device perform the random access only based on the second PRACH resource after being woken up, the timeliness of the random access for the terminal device may not be guaranteed. Therefore, the network device may add the configuration information of the first PRACH resource in the first information carried by the WUS. Since the time domain starting location of the first PRACH resource is earlier than the time domain starting location of the first PRACH resource, and the period of the first PRACH resource is smaller than the period of the first PRACH resource, in a case where the terminal device is in the idle state (or inactive state), the terminal device may perform the random access earlier or more timely based on the first PRACH resource after being woken up by the WUS.

In a possible implementation, the first PRACH resource may be a temporary PRACH resource configured for a contention-based random access process. The purpose is to be able to configure the first PRACH resource earlier than the second PRACH resource configured by the current system. Therefore, at least the time domain resource location information of the first PRACH and the frequency domain resource location information of the first PRACH may be carried in the configuration information of the first PRACH resource (or the temporary PRACH resource), so that the terminal device may obtain the first PRACH resource (or the temporary PRACH resource) different from the second PRACH resource configured by the current system, and then initiate the random access to establish an RRC connection as soon as possible.

In a possible implementation, the first PRACH resource may be a PRACH dedicated to the terminal device, so that the terminal device may perform a non-contention based random access, so as to avoid the interference with random access of other terminal devices during the random access process when the terminal device uses the contention-based random access, thereby ensuring that the success rate of the terminal random access is improved and accelerating the RRC connection establishment process of the terminal. In this implementation, the configuration information of the first PRACH resource in the first indication carried in the WUS may be configuration information of a dedicated PRACH resource.

Optionally, the configuration information of the first PRACH resource is specifically used to configure the terminal device that conforms to the UE identifier.

In one case, the device (such as the MME) of the core network may determine that a certain terminal device currently needs to perform the traffic transmission; the device of the core network may notify the network device to transmit the WUS to the terminal device; accordingly, the network device transmits the WUS to the terminal device, and the WUS may carry the UE identifier and first information, and the first information may include the configuration information of the first PRACH resource (or temporary PRACH resource).

In yet another case, optionally, the configuration information of the first PRACH resource may further include a new UE identifier, and the new UE identifier may also be one of: a new UE ID, a new UE group ID, and a new cell ID. For example, the device of the core network may determine that one or more terminal devices in the terminal group need to perform the traffic transmission; the device of the core network may notify the network device to transmit the WUS to the terminal group; accordingly, the network device transmits the WUS to the terminal devices of the terminal group, and the WUS may carry the UE identifier and the first information, and the first information may include the configuration information of the first PRACH resource (or temporary PRACH resource), and the configuration information of the first PRACH resource may also include a new UE identifier.

The configuration information of the target initial BWP contained in the first information are illustrated below.

The configuration information of the target initial BWP includes: an ID of the target initial BWP, the target initial BWP is one or more initial BWPs in a plurality of initial BWPs, the plurality of initial BWPs include one or more initial uplink BWPs and/or one or more initial downlink BWPs, and the target initial BWP is an uplink BWP and/or a downlink BWP.

The method may also include: transmitting, by the network device, second information. The second information includes configurations of multiple initial BWPs and index numbers of the multiple initial BWPs.

The ID of the target initial BWP included in the configuration information of the target initial BWP may also be an index number of the target initial BWP. Herein, the target initial BWP may include an uplink BWP and/or a downlink. Accordingly, the ID (or index number) of the BWP target initial BWP may only include an ID (or index number) of the uplink BWP, or only include an ID (or index number) of the downlink BWP, or include the ID (or index number) of the uplink BWP and the ID (or index number) of the downlink BWP.

The different cases of the configuration information of the target initial BWP including different contents and the initial BWP being pre-configured by the terminal device are illustrated respectively below.

Case 1: The initial BWPs pre-configured by the terminal device includes one initial downlink BWP and multiple initial uplink BWPs. The ID of the target initial BWP included in the configuration information of the target initial BWP may be an ID of an uplink BWP.

Case 2: The initial BWPs pre-configured by the terminal device includes one initial uplink BWP and multiple initial downlink BWPs. The ID of the target initial BWP included in the configuration information of the target initial BWP may be an ID of a downlink BWP.

Case 3: The initial BWP pre-configured by the terminal device includes multiple initial uplink BWPs and multiple initial downlink BWPs. Usually, there are correspondences between IDs of the multiple initial uplink BWPs and IDs of the multiple initial downlink BWPs. Herein, a correspondence may refer to that an initial downlink BWP and an initial uplink BWP use the same ID (or index number). Alternatively, the correspondence may also refer to a matching relationship between an ID of a preset initial downlink BWP and an ID of a preset initial uplink BWP. Since the terminal device pre-configures an initial uplink BWP, and there are correspondence between the IDs of the multiple initial uplink BWPs and the IDs of the multiple initial downlink BWPs, the configuration information of the target initial BWP may include an ID of the target initial BWP, and the ID of the target initial BWP may be a ID of a downlink BWP.

Case 4: The initial BWP pre-configured by the terminal device includes multiple initial uplink BWPs and multiple initial downlink BWPs. Differ from the aforementioned case 3, in this case, the correspondences between the IDs of the multiple initial uplink BWPs and the IDs of the multiple initial downlink BWPs may not be pre-configured in the terminal device. Therefore, the configuration information of the target initial BWP may include IDs of multiple target initial BWPs.

Optionally, the configuration information of the target initial BWP may include IDs of two target initial BWPs. The IDs of the two target initial BWPs may include an ID of a downlink BWP and an ID of a uplink BWP.

Optionally, the configuration information of the target initial BWP is specifically used to configure the terminal device that conforms to the UE identifier.

Optionally, the configuration information of the target initial BWP may further include a new UE identifier, and the new UE identifier may also be one of: a new UE ID, a new UE group ID, and a new cell ID. Correspondingly, in a case where the terminal device determines that the terminal device itself is the terminal device that conforms to the UE identifier based on the UE identifier contained in the WUS, the second component may be woken up based on the WUS. In a case where the terminal device determines that terminal device itself is the terminal device that conforms to the UE identifier based on the new UE identifier contained in the configuration information of the target initial BWP, the second component of the terminal device determines the target initial BWP based on the configuration information of the target initial BWP, so as to perform the initial access on the target initial BWP. In addition, such situations may also include: in a case where the terminal device is determined that the terminal device itself is not the terminal device that conforms to the UE identifier based on the new UE identifier contained in the configuration information of the target initial BWP, the second component of the terminal device does not determine the target initial BWP based on the configuration information of the target initial BWP.

Optionally, in the method provided in this embodiment, the terminal device is a reduced capability (RedCap) terminal. This is because, usually for other types of terminal devices, the system configures an initial BWP for them; but for a reduced capability (RedCap) terminal, due to the smaller bandwidth (usually 20MHz, which is less than the traditional 100MHz), fewer antennas, simpler modulation manners (such as 64QAM), and applying half-duplex FDD, etc., the system may pre-configure multiple initial BWPs for the RedCap terminal. By adopting the solution provided in this embodiment, multiple initial BWPs may be pre-configured to ensure that when the network device indicates different terminal devices to perform the initial access, the uplink BWP and/or downlink BWP to be used this time may be determined only by the first information in the WUS indicating the ID of the target initial BWP, and then the processing for the initial access is performed on the uplink BWP and/or downlink BWP, thereby achieving the effect of load diversion or load balancing. In addition, since this method does not require the terminal device side to save too much information generated during the interaction process, the resource fragments may be reduced, which is more suitable for a narrowband RedCap terminal.

The configuration information of the synchronization signal contained in the first information are illustrated below.

The configuration information of the synchronization signal may include one or more of the following: a transmitting period of the synchronization signal; time domain resource location information of the synchronization signal; frequency domain resource location information of the synchronization signal; an antenna port of the synchronization signal; and a transmitting beam of the synchronization signal.

Herein, the synchronization signal may specifically include one or more of the following: SSB (Synchronization Signal Block) and other reference signals. The other reference signals may include: a TRS (Time Reference Signal) and/or a CSI-RS (Channel-State Information Reference Signal).

The transmitting period of the synchronization signal may be smaller than an original transmitting period of the synchronization signal in the current system, that is, the synchronization signal may be transmitted in denser (more frequently). The transmitting period of the synchronization signal may be specifically configured according to the actual situations, for example, the transmitting period of the synchronization signal may be 1ms, 2ms or longer or shorter, which is not exhaustively listed herein.

Optionally, the time domain resource location information of the synchronization signal may include one or more of: a time domain location of a time domain resource of the synchronization signal; and a duration of the time domain resource of the synchronization signal. A time unit of the time domain location of the time domain resource of the synchronization signal may be any one of slot, symbol, frame, subframe, millisecond, etc.

The time domain location of the time domain resource of the synchronization signal may include: a time domain starting location of the time domain resource of the synchronization signal, and/or a time domain ending location of the time domain resource of the synchronization signal.

Optionally, the time domain resource location information of the synchronization signal includes one or more of the following: a second time domain offset, where the second time domain offset is used to represent an offset between a reception time of the WUS and a time domain location of a time domain resource of the synchronization signal; and a duration of the time domain resource of the synchronization signal.

The time domain location of the time domain resource of the synchronization signal may include: the time domain starting location of the time domain resource of the synchronization signal, and/or the time domain ending location of the time domain resource of the synchronization signal. Since the WUS may occupy a period of the time domain resource, in this embodiment, a time (or a moment) in the period of the time domain resource occupied by the WUS may be designated as the reception time of the WUS. The reception time of the WUS may include: a starting reception time of the WUS, or a reception completion time of the WUS. It should be understood that the reception time of the WUS may also be other time in the time domain resource occupied by the WUS, such as a midpoint time of the time domain resource occupied by the WUS, etc., as long as the terminal device and the network device both use the same reception time of the WUS.

The second time domain offset may include one numerical value or multiple numerical values.

The second time domain offset includes one numerical value, such as a seventh numerical value; the seventh numerical value is used to represent an offset between the reception time of the WUS and the time domain starting location of the time domain resource of the synchronization signal; or the seventh numerical value is used to represent an offset between the reception time of the WUS and the time domain ending location of the time domain resource of the synchronization signal. A unit of the second time domain offset may be at least one of slot, symbol, frame, subframe, millisecond, etc. In this implementation, the time domain resource location information of the synchronization signal may further include: the duration of the time domain resource of the synchronization signal. Alternatively, the second time domain offset may include multiple numerical values, such as two numerical values, which respectively are an eighth numerical value and a ninth numerical value. The eighth value is used to represent an offset between the reception time of the WUS and the time domain starting location of the time domain resource of the synchronization signal; and the ninth value is used to represent an offset between the reception time of the WUS and the time domain ending location of the time domain resource of the synchronization signal. A unit of the second time domain offset may be at least one of slot, symbol, frame, subframe, millisecond, etc. Herein, the eighth numerical value is smaller than the ninth numerical value.

Optionally, the frequency domain resource location information of the synchronization signal includes one or more of the following: a location of a second-type frequency point of a frequency domain resource of the synchronization signal; and a size of the frequency domain resource of the synchronization signal.

The second-type frequency point of the frequency domain resource of the synchronization signal includes one or more of the following: a lowest frequency point of the frequency domain resource of the synchronization signal; a highest frequency point of the frequency domain resource of the synchronization signal; and a central frequency point of the frequency domain resource of the synchronization signal. A specific location of the second-type frequency point may also vary according to different actual situations, as long as the terminal device and the network device both determine to use the same reference frequency point in advance.

Optionally, the frequency domain resource location information of the synchronization signal includes one or more of the following: a second frequency domain offset, where the second time domain offset is used to represent an offset between the frequency domain location of the WUS and a second-type frequency point of a frequency domain resource of the synchronization signal; and a size of the frequency domain resource of the synchronization signal.

The unit of the second frequency domain offset may be any one of PRB, RB, Khz, and Mhz.

Similarly, the second-type frequency point of the frequency domain resource of the synchronization signal includes one or more of the following: the lowest frequency point of the frequency domain resource of the synchronization signal; the highest frequency point of the frequency domain resource of the synchronization signal; and the central frequency point of the frequency domain resource of the synchronization signal.

The frequency domain location of the WUS include one of the following: a lowest frequency point in the frequency domain resource occupied by the WUS; a highest frequency point in the frequency domain resource occupied by the WUS; or a central frequency point in the frequency domain resource occupied by the WUS.

The unit of the second frequency domain offset may be any one of PRB, RB, Khz, Mhz, etc. The second frequency domain offset may include one or more numerical values.

In a possible implementation, the second frequency domain offset includes one numerical value, which is referred to as a tenth numerical value. The second frequency domain offset value (i.e., the tenth value) may be used to represent a relative frequency domain offset between the second-type frequency point of the frequency domain resource of the synchronization signal and a frequency domain location of the WUS. In this implementation, the frequency domain resource location information of the synchronization signal may further include: the size of the frequency domain resource of the synchronization signal.

In a possible implementation, the second frequency domain offset includes two numerical values, which respectively an eleventh numerical value and a twelfth numerical value. The eleventh numerical value may be used to represent a relative frequency domain offset between one second-type frequency point of the frequency domain resource of the synchronization signal and one frequency domain location of the WUS; and the twelfth numerical value is used to represent a relative frequency domain offset between another second-type frequency point of the frequency domain resource of the synchronization signal and one frequency domain location of the WUS. In this implementation, the frequency domain resource location information of the synchronization signal may not include the size of the frequency domain resource of the first PRACH.

The antenna port of the synchronization signal and the transmitting beam of the synchronization signal may be determined by the network device based on the actual situations of transmission, which are not limited herein.

It should also be pointed out that the configuration information of the aforementioned synchronization signal may include all of the above contents, or may only include a portion of the above contents. In the case where the configuration information of the synchronization signal only includes a portion of the above contents, the configuration information of the synchronization signal may include third configuration information and fourth configuration information; or the configuration information of the synchronization signal may include the transmitting period of the synchronization signal and the fourth configuration information, etc., which are not exhaustively listed herein.

Optionally, the configuration information of the aforementioned synchronization signal is specifically used to configure the terminal device that conforms to the UE identifier. Therefore, the WUS may also carry the UE identifier, and the UE identifier is a UE ID, a UE group ID, or a cell ID. Alternatively, the WUS may also carry a bitmap. The processing method for the terminal device to determine whether the terminal device itself is the terminal device that conforms to the UE identifier based on the UE identifier (or bitmap) carried in the WUS has been described in the previous embodiments and will not be repeated herein.

Optionally, the configuration information of the synchronization signal is specifically used to configure the terminal device that conforms to the UE identifier. Alternatively, the configuration information of the synchronization signal may further include a new UE identifier, and the new UE identifier may also be one of: a new UE ID, a new UE group ID, and a new cell ID. Correspondingly, in a case where the terminal device determines that the terminal device itself is the terminal device that conforms to the UE identifier based on the UE identifier contained in the WUS, the second component may be woken up based on the WUS; in a case where the terminal device determines that the terminal device itself is the terminal device that conforms to the new UE identifier based on the new UE identifier contained in the configuration information of the synchronization signal, the second component of the terminal device determines the synchronization signal based on the configuration information of the synchronization signal; and performs the time-frequency synchronization based on the synchronization signal.

It can be seen that by adopting the above solution, the network device transmits the WUS, and the WUS may be used to wake up the terminal device. The first information carried in the WUS may be used for operations performed by the terminal device after being woken up. In this way, the terminal device may be woken up based on a reception of the WUS and may perform the operations after being woken up in a timely manner based on the first information in the WUS, thereby shortening a latency of the traffic transmission and improving the processing efficiency of a system.

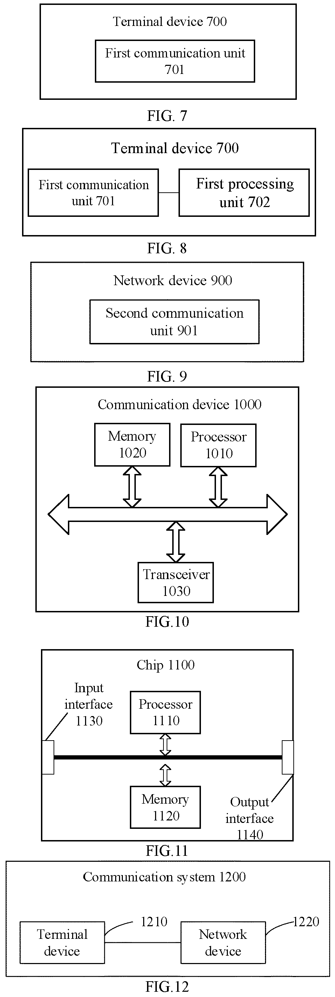

FIG. 7 is a schematic block diagram of a terminal device 700 according to an embodiment of the present application. The terminal device 700 may include:
a first communication unit 701, which is used to monitor a wake-up signal (WUS); where the WUS is used to wake up the terminal device; the WUS carries first information, and the first information is used for an operation performed by the terminal device after being woken up.

The WUS further includes: a UE identifier, where the UE identifier is a UE ID, or a UE group ID, or a cell ID.

The WUS is specifically used to wake up the terminal device that conforms to the UE identifier.

The first information includes one or more information of the following: information for performing random access, where the information for performing the random access is the configuration information of the first physical random access channel (PRACH) resource; information for performing an initial access, where the information for performing the initial access is the configuration information of the target initial bandwidth part (BWP); and information for performing time-frequency synchronization, where the information for performing the time-frequency synchronization is the configuration information of the synchronization signal. The configuration information of the first PRACH resource is specifically used to configure the terminal device that conforms to the UE identifier.

The configuration information of the first PRACH resource includes one or more of the following: time domain resource location information of a first PRACH; frequency domain resource location information of the first PRACH; a period of the first PRACH; a slot of the first PRACH; a subcarrier spacing of the first PRACH; a number of first PRACH occasions; a mapping relationship between the first PRACH and a synchronization signal block (SSB); time domain resource location information of a first PRACH occasion; frequency domain resource location information of the first PRACH occasion; and a preamble index number.

The time domain resource location information of the first PRACH includes one or more of the following: a time domain location of a time domain resource of the first PRACH; and a duration of the time domain resource of the first PRACH.

The time domain resource location information of the first PRACH includes one or more of the following: a first time domain offset, where the first time domain offset is used to represent an offset between a reception time of the WUS and a time domain location of the time domain resource of the first PRACH; and a duration of the time domain resource of the first PRACH.

The time domain location of the time domain resource of the first PRACH includes: a time domain starting location of the time domain resource of the first PRACH, and/or a time domain ending location of the time domain resource of the first PRACH.

The frequency domain resource location information of the first PRACH includes one or more of the following: a location of a first-type frequency point of a frequency domain resource of the first PRACH; and a size of the frequency domain resource of the first PRACH.

The frequency domain resource location information of the first PRACH includes one or more of the following: a first frequency domain offset, where the first frequency domain offset is used to represent an offset between a frequency domain location of the WUS and a first-type frequency point of a frequency domain resource of the first PRACH; and a size of the frequency domain resource of the first PRACH.

The first-type frequency point of the frequency domain resource of the first PRACH includes one or more of the following: a lowest frequency point of the frequency domain resource of the first PRACH; a highest frequency point of the frequency domain resource of the first PRACH; and a central frequency point of the frequency domain resource of the first PRACH.

On the basis of FIG. 7, as shown in FIG. 8, the terminal device further includes: a first processing unit 702, which is used to determine the first PRACH resource based on the configuration information of the first PRACH resource, so as to perform the random access on the first PRACH resource.

The first communication unit is used to monitor the WUS in a case where the terminal device is in an idle state.

The first communication unit is used to receive configuration information of a second PRACH resource configured by a network device before monitoring the WUS, where the configuration information of the second PRACH resource is different from the configuration information of the first PRACH resource.

The configuration information of the second PRACH resource is used to determine the second PRACH resource for performing the random access; and a time domain resource location of the second PRACH resource is different from a time domain resource location of the first PRACH resource.

The configuration information of the target initial BWP includes: an ID of the target initial BWP, the target initial BWP is one or more initial BWPs in a plurality of initial BWPs, the plurality of initial BWPs include one or more initial uplink BWPs and/or one or more initial downlink BWPs, and the target initial BWP is an uplink BWP and/or a downlink BWP.

The configuration information of the target initial BWP is specifically used to configure the terminal device that conforms to the UE identifier.

The first processing unit 702 is used to determine the target initial BWP based on the configuration information of the target initial BWP, so as to perform the initial access on the target initial BWP.

The terminal device is a reduced capability (RedCap) terminal.

The configuration information of the synchronization signal includes one or more of the following: a transmitting period of the synchronization signal; time domain resource location information of the synchronization signal; frequency domain resource location information of the synchronization signal; an antenna port of the synchronization signal; and a transmitting beam of the synchronization signal.

The configuration information of the synchronization signal is specifically used to configure the terminal device that conforms to the UE identifier.

The time domain resource location information of the synchronization signal includes one or more of the following: a time domain location of a time domain resource of the synchronization signal; and a duration of the time domain resource of the synchronization signal.

The time domain resource location information of the synchronization signal includes one or more of the following: a second time domain offset, where the second time domain offset is used to represent an offset between a reception time of the WUS and a time domain location of a time domain resource of the synchronization signal; and a duration of the time domain resource of the synchronization signal.

The time domain location of the time domain resource of the synchronization signal includes: a time domain starting location of the time domain resource of the synchronization signal, and/or a time domain ending location of the time domain resource of the synchronization signal.

The frequency domain resource location information of the synchronization signal includes one or more of the following: a location of a second-type frequency point of a frequency domain resource of the synchronization signal; and a size of the frequency domain resource of the synchronization signal.

The frequency domain resource location information of the synchronization signal includes one or more of the following: a second frequency domain offset, where the second time domain offset is used to represent an offset between the frequency domain location of the WUS and a second-type frequency point of a frequency domain resource of the synchronization signal; and a size of the frequency domain resource of the synchronization signal.

The second-type frequency point of the frequency domain resource of the synchronization signal includes one or more of the following: a lowest frequency point of the frequency domain resource of the synchronization signal; a highest frequency point of the frequency domain resource of the synchronization signal; and a central frequency point of the frequency domain resource of the synchronization signal.

The configuration information of the synchronization signal is specifically used to configure the terminal device that conforms to the UE identifier.

The first processing unit 702 is used to determine the synchronization signal based on the configuration information of the synchronization signal, as as to perform the time-frequency synchronization based on the synchronization signal.

FIG. 9 is a schematic block diagram of a network device 900 according to an embodiment of the present application. The terminal device 900 may include:
a second communication unit 901, which is used to transmit a wake-up signal (WUS); where the WUS is used to wake up the terminal device; the WUS carries first information, and the first information is used for an operation performed by a terminal device after being woken up.

The WUS further includes: a UE identifier, where the UE identifier is a UE ID, or a UE group ID, or a cell ID.

The WUS is specifically used to wake up the terminal device that conforms to the UE identifier.

The first information includes one or more information of the following: information for performing random access, where the information for performing the random access is the configuration information of the first physical random access channel (PRACH) resource; information for performing initial access, where the information for performing the initial access is the configuration information of the target initial bandwidth part (BWP); and information for performing time-frequency synchronization, where the information for performing the time-frequency synchronization is the configuration information of the synchronization signal.

The configuration information of the first PRACH resource is specifically used to configure the terminal device that conforms to the UE identifier.

The configuration information of the first PRACH resource includes one or more of the following: time domain resource location information of a first PRACH; frequency domain resource location information of the first PRACH; a period of the first PRACH; a slot of the first PRACH; a subcarrier spacing of the first PRACH; a number of first PRACH occasions; a mapping relationship between the first PRACH and a synchronization signal block (SSB); time domain resource location information of a first PRACH occasion; frequency domain resource location information of the first PRACH occasion; and a preamble index number.

The time domain resource location information of the first PRACH includes one or more of the following: a time domain location of a time domain resource of the first PRACH; and a duration of the time domain resource of the first PRACH.

The time domain resource location information of the first PRACH includes one or more of the following: a first time domain offset, where the first time domain offset is used to represent an offset between a reception time of the WUS and time domain location of a time domain resource of the first PRACH; and a duration of the time domain resource of the first PRACH.

The time domain location of the time domain resource of the first PRACH includes: a time domain starting location of the time domain resource of the first PRACH, and/or a time domain ending location of the time domain resource of the first PRACH.

The frequency domain resource location information of the first PRACH includes one or more of the following: a location of a first-type frequency point of a frequency domain resource of the first PRACH; and a size of the frequency domain resource of the first PRACH.

The frequency domain resource location information of the first PRACH includes one or more of the following: a first frequency domain offset, where the first frequency domain offset is used to represent an offset between a frequency domain location of the WUS and a first-type frequency point of a frequency domain resource of the first PRACH; and a size of the frequency domain resource of the first PRACH.

The first-type frequency point of the frequency domain resource of the first PRACH includes one or more of the following: a lowest frequency point of the frequency domain resource of the first PRACH; a highest frequency point of the frequency domain resource of the first PRACH; and a central frequency point of the frequency domain resource of the first

PRACH.

The second communication unit is used to configure configuration information of the second PRACH resource for the terminal device; where the configuration information of the second PRACH resource is different from the configuration information of the first PRACH resource.

The configuration information of the second PRACH resource is used to determine the second PRACH resource for performing the random access; and a time domain resource location of the second PRACH resource is different from a time domain resource location of the first PRACH resource.

The configuration information of the target initial BWP includes: an ID of the target initial BWP, the target initial BWP is one or more initial BWPs in a plurality of initial BWPs, the plurality of initial BWPs include one or more initial uplink BWPs and/or one or more initial downlink BWPs, and the target initial BWP is an uplink BWP and/or a downlink BWP.

The configuration information of the target initial BWP is specifically used to configure the terminal device that conforms to the UE identifier.

The configuration information of the synchronization signal includes one or more of the following: a transmitting period of the synchronization signal; time domain resource location information of the synchronization signal; frequency domain resource location information of the synchronization signal; an antenna port of the synchronization signal; and a transmitting beam of the synchronization signal.

The configuration information of the synchronization signal is specifically used to configure the terminal device that conforms to the UE identifier.

The time domain resource location information of the synchronization signal includes one or more of the following: a time domain location of a time domain resource of the synchronization signal; and a duration of the time domain resource of the synchronization signal.

The time domain resource location information of the synchronization signal includes one or more of the following: a second time domain offset, where the second time domain offset is used to represent an offset between a reception time of the WUS and a time domain location of a time domain resource of the synchronization signal; and a duration of the time domain resource of the synchronization signal.

The time domain location of the time domain resource of the synchronization signal includes: a time domain starting location of the time domain resource of the synchronization signal, and/or a time domain ending location of the time domain resource of the synchronization signal.

The frequency domain resource location information of the synchronization signal includes one or more of the following: a location of a second-type frequency point of a frequency domain resource of the synchronization signal; and a size of the frequency domain resource of the synchronization signal.

The frequency domain resource location information of the synchronization signal includes one or more of the following: a second frequency domain offset, where the second time domain offset is used to represent an offset between the frequency domain location of the WUS and a second-type frequency point of a frequency domain resource of the synchronization signal; and a size of the frequency domain resource of the synchronization signal.

The second-type frequency point of the frequency domain resource of the synchronization signal includes one or more of the following: a lowest frequency point of the frequency domain resource of the synchronization signal; a highest frequency point of the frequency domain resource of the synchronization signal; and a central frequency point of the frequency domain resource of the synchronization signal.

The configuration information of the synchronization signal is specifically used to configure the terminal device that comforms to the UE identifier.

The network device in the embodiments of the present application can implement the corresponding functions of the network device in the aforementioned communication method embodiments of the network device. The processes, functions, implementations and beneficial effects corresponding to various modules (sub-modules, units or components, etc.) in the network device may refer to in the corresponding description in the above method embodiments, which will not be repeated herein. It needs to be noted that the functions described for various modules (sub-modules, units or components, etc.) in the network device of the embodiments of the application may be implemented by different modules (sub-modules, units or components, etc.), or may also be implemented by a same module (sub-module, unit or component, etc.).

In addition, although not illustrated in FIG. 9 of the aforementioned embodiments, the network device may also include a second processing unit. The second processing unit may perform the processing such as the network device generating the WUS in the aforementioned second aspect of the communication method embodiment, which will not be repeated herein.

FIG. 10 is a schematic structural diagram of a communication device 1000 according to the embodiments of the present application. The communication device 1000 includes a processor 1010, and the processor 1010 may invoke and execute a computer program from a memory to cause the communication device 1000 to implement the method in the embodiments of the present application.

In a possible implementation, the communication device 1000 may further include a memory 1020. Herein, the processor 1010 may invoke and execute a computer program from the memory 1020 to cause the communication device 1000 to implement the method in the embodiments of the present application. Herein, the memory 1020 may be a separate device independent from the processor 1010, or may also be integrated into the processor 1010.

In a possible implementation, the communication device 1000 may further include a transceiver 1030, and the processor 1010 may control the transceiver 1030 to communicate with other devices, and specifically, to be capable of transmitting information or data to other devices, or receive information or data transmitted by other devices. Herein, the transceiver 1030 may include a transmitter and a receiver. The transceiver 1030 may further include an antenna, and a number of antennas may be one or more.

In a possible implementation, the communication device 1000 may be the network device in the embodiments of the present application, and the communication device 1000 may implement the corresponding processes implemented by the network device in respective methods of the embodiments of the present application, which will not be repeated here for the sake of brevity.

In a possible implementation, the communication device 1000 may be the terminal device in the embodiments of the present application, and the communication device 1000 may implement the corresponding processes implemented by the terminal device in respective methods of the embodiments of the present application, which will not be repeated here for the sake of brevity.

FIG. 11 is a schematic structural diagram of a chip 1100 according to the embodiments of the present application. The chip 1100 includes a processor 1110, and the processor 1110 may invoke and execute a computer program from a memory to implement the method in the embodiments of the present application.

In a possible implementation, the chip 1100 may further include a memory 1120. Herein, the processor 1110 may invoke and execute the computer program from the memory 1120 to implement the method performed by the terminal device or the network device in the embodiments of the present application. Herein, the memory 1120 may be a separate device independent from the processor 1110, or may also be integrated into the processor 1110.

In a possible implementation, the chip 1100 may further include an input interface 1130. Herein, the processor 1110 may control the input interface 1130 to communicate with other devices or chips, and specifically, to be capable of acquiring information or data transmitted by other devices or chips

In a possible implementation, the chip 1100 may further include an output interface 1140. Herein, the processor 1110 may control the output interface 1140 to communicate with other devices or chips, and specifically, to be capable of outputting information or data to other devices or chips.

In a possible implementation, the chip may be applied to the network device in the embodiments of the present application, and the chip may implement the corresponding processes implemented by a network device in the respective methods of the embodiments of the present application, which will not be repeated here for the sake of brevity.

In a possible implementation, the chip may be applied to the terminal device in the embodiments of the present application, and the chip may implement the corresponding processes implemented by a terminal device in the respective methods of the embodiments of the present application, which will not be repeated here for the sake of brevity.

The chips applied to the network device and the terminal device may be the same chip or different chips.

It should be understood that the chip mentioned in the embodiments of the present application may also be referred to as a system on chip, a system chip, a chip system or a system-on-chip chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. Herein, the general-purpose processor mentioned above may be a microprocessor or may also be any conventional processor.

The memory mentioned above may be a volatile memory or a non-volatile memory, or may include both volatile and non-volatile memories. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

FIG. 12 is a schematic block diagram of a communication system 1200 according to the embodiments of the present application. The communication system 1200 includes a terminal device 1210 and a network device 1220.

Herein, the terminal device 1210 may be configured to implement the corresponding functions implemented by the terminal device in the above method, and the network device 1220 may be configured to implement the corresponding functions implemented by the network device in the above method. For the sake of brevity, it will not repeated here.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present application are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available mediums. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

It should be understood that, in the various embodiments of the present application, a size of serial numbers of the above processes does not imply an order of execution, and the execution order of the respective processes should be determined by their function and internal logic, but should not constitute any limitation on the implementation processes of the embodiments of the present application.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of claims.

## Claims

1. A communication method, comprising:
monitoring, by a terminal device, a wake-up signal (WUS);
wherein the WUS is used to wake up the terminal device; the WUS carries first information, and the first information is used for an operation performed by the terminal device after being woken up.

2. The method according to claim 1, wherein the WUS further comprises: a UE identifier, wherein the UE identifier is a UE ID, a UE group ID, or a cell ID.

3. The method according to claim 2, wherein the WUS is specifically used to wake up the terminal device that conforms to the UE identifier.

4. The method according to claim 2 or 3, wherein the first information comprises one or more information of:
information for performing random access, wherein the information for performing the random access is configuration information of a first physical random access channel (PRACH) resource;
information for performing initial access, wherein the information for performing the initial access is configuration information of a target initial bandwidth part (BWP); and
information for performing time-frequency synchronization, wherein the information for performing the time-frequency synchronization is configuration information of a synchronization signal.

5. The method according to claim 4, wherein the configuration information of the first PRACH resource is specifically used to configure the terminal device that conforms to the UE identifier.

6. The method according to claim 4 or 5, wherein the configuration information of the first PRACH resource comprises one or more of:
time domain resource location information of a first PRACH;
frequency domain resource location information of the first PRACH;
a period of the first PRACH;
a slot of the first PRACH;
a subcarrier spacing of the first PRACH;
a number of first PRACH occasions;
a mapping relationship between the first PRACH and a synchronization signal block (SSB);
time domain resource location information of a first PRACH occasion; and
frequency domain resource location information of the first PRACH occasion;
a preamble index number.

7. The method according to claim 6, wherein the time domain resource location information of the first PRACH comprises one or more of:
a time domain location of a time domain resource of the first PRACH; and
a duration of the time domain resource of the first PRACH.

8. The method according to claim 6, wherein the time domain resource location information of the first PRACH comprises one or more of:
a first time domain offset, wherein the first time domain offset is used to represent an offset between a reception time of the WUS and a time domain location of a time domain resource of the first PRACH; and
a duration of the time domain resource of the first PRACH.

9. The method according to claim 7 or 8, wherein the time domain location of the time domain resource of the first PRACH comprises:
a time domain starting location of the time domain resource of the first PRACH, and/or a time domain ending location of the time domain resource of the first PRACH.

10. The method according to any one of claims 6 to 9, wherein the frequency domain resource location information of the first PRACH comprises one or more of:
a location of a first-type frequency point of a frequency domain resource of the first PRACH; and
a size of the frequency domain resource of the first PRACH.

11. The method according to any one of claims 6 to 9, wherein the frequency domain resource location information of the first PRACH comprises one or more of:
a first frequency domain offset, wherein the first frequency domain offset is used to represent an offset between a frequency domain location of the WUS and a first-type frequency point of a frequency domain resource of the first PRACH; and
a size of the frequency domain resource of the first PRACH.

12. The method according to claim 10 or 11, wherein the first-type frequency point of the frequency domain resource of the first PRACH comprises one or more of:
a lowest frequency point of the frequency domain resource of the first PRACH;
a highest frequency point of the frequency domain resource of the first PRACH; and
a central frequency point of the frequency domain resource of the first PRACH.

13. The method according to any one of claims 4 to 12, wherein the method further comprises:
determining, by the terminal device, the first PRACH resource based on the configuration information of the first PRACH resource; and
performing, by the terminal device, the random access on the first PRACH resource.

14. The method according to claim 13, wherein the monitoring, by the terminal device, the WUS further comprises:
monitoring, by the terminal device, the WUS in a case where the terminal device is in an idle state.

15. The method according to claim 13 or 14, wherein before the monitoring, by the terminal device, the WUS, the method further comprises:
receiving, by the terminal device, configuration information of a second PRACH resource configured by a network device;
wherein the configuration information of the second PRACH resource is different from the configuration information of the first PRACH resource.

16. The method according to claim 15, wherein the configuration information of the second PRACH resource is used to determine the second PRACH resource for performing the random access; and a time domain resource location of the second PRACH resource is different from a time domain resource location of the first PRACH resource.

17. The method according to any one of claims 4 to 16, wherein the configuration information of the target initial BWP comprises:
an ID of the target initial BWP, the target initial BWP being one or more initial BWPs in a plurality of initial BWPs, the plurality of initial BWPs comprising one or more initial uplink BWPs and/or one or more initial downlink BWPs, and the target initial BWP being an uplink BWP and/or a downlink BWP.

18. The method according to claim 17, wherein the configuration information of the target initial BWP is specifically used to configure the terminal device that conforms to the UE identifier.

19. The method according to claim 17 or 18, wherein the method further comprises:
determining, by the terminal device, the target initial BWP based on the configuration information of the target initial BWP, so as to perform the initial access on the target initial BWP.

20. The method according to any one of claims 17 to 19, wherein the terminal device is a reduced capability (RedCap) terminal.

21. The method according to any one of claims 6 to 20, wherein the configuration information of the synchronization signal comprises one or more of:
a transmitting period of the synchronization signal;
time domain resource location information of the synchronization signal;
frequency domain resource location information of the synchronization signal;
an antenna port of the synchronization signal; and
a transmitting beam of the synchronization signal.

22. The method according to claim 21, wherein the configuration information of the synchronization signal is specifically used to configure the terminal device that conforms to the UE identifier.

23. The method according to claim 21 or 22, wherein the time domain resource location information of the synchronization signal comprises one or more of:
a time domain location of a time domain resource of the synchronization signal; and
a duration of the time domain resource of the synchronization signal.

24. The method according to claim 21 or 22, wherein the time domain resource location information of the synchronization signal comprises one or more of:
a second time domain offset, wherein the second time domain offset is used to represent an offset between a reception time of the WUS and a time domain location of a time domain resource of the synchronization signal; and
a duration of the time domain resource of the synchronization signal.

25. The method according to claim 23 or 24, wherein the time domain location of the time domain resource of the synchronization signal comprises: a time domain starting location of the time domain resource of the synchronization signal, and/or a time domain ending location of the time domain resource of the synchronization signal.

26. The method according to any one of claims 21 to 25, wherein the frequency domain resource location information of the synchronization signal comprises one or more of:
a location of a second-type frequency point of a frequency domain resource of the synchronization signal; and
a size of the frequency domain resource of the synchronization signal.

27. The method according to any one of claims 21 to 25, wherein the frequency domain resource location information of the synchronization signal comprises one or more of:
a second frequency domain offset, wherein the second time domain offset is used to represent an offset between the frequency domain location of the WUS and a second-type frequency point of a frequency domain resource of the synchronization signal; and
a size of the frequency domain resource of the synchronization signal.

28. The method according to claim 26 or 27, wherein the second-type frequency point of the frequency domain resource of the synchronization signal comprises one or more of: a lowest frequency point of the frequency domain resource of the synchronization signal; a highest frequency point of the frequency domain resource of the synchronization signal; and a central frequency point of the frequency domain resource of the synchronization signal.

29. The method according to any one of claims 21 to 28, wherein the configuration information of the synchronization signal is specifically used to configure the terminal device that conforms to the UE identifier.

30. The method according to any one of claims 21 to 29, wherein the method further comprises:
determining, by the terminal device, the synchronization signal based on the configuration information of the synchronization signal, so as to perform the time-frequency synchronization based on the synchronization signal.

31. The method according to any one of claims 1 to 30, wherein the terminal device is a low-power consumption terminal.

32. A communication method, comprising:
transmitting, by a network device, a wake-up signal (WUS);
wherein the WUS is used to wake up a terminal device; the WUS carries first information, and the first information is used for an operation performed by the terminal device after being woken up.

33. The method according to claim 32, wherein the WUS further comprises: a UE identifier, and the UE identifier is a UE ID, a UE group ID, or a cell ID.

34. The method according to claim 33, wherein the WUS is specifically used to wake up the terminal device that conforms to the UE identifier.

35. The method according to claim 33 or 34, wherein the first information comprises one or more information of:
information for performing random access, wherein the information for performing the random access is configuration information of a first physical random access channel (PRACH) resource;
information for performing initial access, wherein the information for performing the initial access is configuration information of a target initial bandwidth part (BWP); and
information for performing time-frequency synchronization, wherein the information for performing the time-frequency synchronization is configuration information of a synchronization signal.

36. The method according to claim 35, wherein the configuration information of the first PRACH resource is specifically used to configure the terminal device that conforms to the UE identifier.

37. The method according to claim 35 or 36, wherein the configuration information of the first PRACH resource comprises one or more of:
time domain resource location information of a first PRACH;
frequency domain resource location information of the first PRACH;
a period of the first PRACH;
a slot of the first PRACH;
a subcarrier spacing of the first PRACH;
a number of first PRACH occasions;
a mapping relationship between the first PRACH and a synchronization signal block (SSB);
time domain resource location information of a first PRACH occasion;
frequency domain resource location information of the first PRACH occasion; and
a preamble index number.

38. The method according to claim 37, wherein the time domain resource location information of the first PRACH comprises one or more of:
a time domain location of a time domain resource of the first PRACH; and
a duration of the time domain resource of the first PRACH.

39. The method according to claim 37, wherein the time domain resource location information of the first PRACH comprises one or more of:
a first time domain offset, wherein the first time domain offset is used to represent an offset between a reception time of the WUS and a time domain location of a time domain resource of the first PRACH; and
a duration of the time domain resource of the first PRACH.

40. The method according to claim 38 or 39, wherein the time domain location of the time domain resource of the first PRACH comprises:
a time domain starting location of the time domain resource of the first PRACH, and/or a time domain ending location of the time domain resource of the first PRACH.

41. The method according to any one of claims 37 to 40, wherein the frequency domain resource location information of the first PRACH comprises one or more of:
a location of a first-type frequency point of a frequency domain resource of the first PRACH; and
a size of the frequency domain resource of the first PRACH.

42. The method according to any one of claims 37 to 40, wherein the frequency domain resource location information of the first PRACH comprises one or more of:
a first frequency domain offset, wherein the first frequency domain offset is used to represent an offset between a frequency domain location of the WUS and a first-type frequency point of a frequency domain resource of the first PRACH; and
a size of the frequency domain resource of the first PRACH.

43. The method according to claim 41 or 42, wherein the first-type frequency point of the frequency domain resource of the first PRACH comprises one or more of:
a lowest frequency point of the frequency domain resource of the first PRACH;
a highest frequency point of the frequency domain resource of the first PRACH; and
a central frequency point of the frequency domain resource of the first PRACH.

44. The method according to any one of claims 35 to 43, wherein before the transmitting, by the network device, the wake-up signal (WUS), the method further comprises:
configuring, by the network device, configuration information of a second PRACH resource for the terminal device;
wherein the configuration information of the second PRACH resource is different from the configuration information of the first PRACH resource.

45. The method according to claim 44, wherein the configuration information of the second PRACH resource is used to determine the second PRACH resource used for performing the random access; and a time domain resource location of the second PRACH resource is different from a time domain resource location of the first PRACH resource.

46. The method according to any one of claims 35 to 45, wherein the configuration information of the target initial BWP comprises:
an ID of the target initial BWP, the target initial BWP being one or more initial BWPs in a plurality of initial BWPs, the plurality of initial BWPs comprising one or more initial uplink BWPs and/or one or more initial downlink BWPs, and the target initial BWP being an uplink BWP and/or a downlink BWP.

47. The method according to claim 46, wherein the configuration information of the target initial BWP is specifically used to configure the terminal device that conforms to the UE identifier.

48. The method according to claim 46 or 47, wherein the terminal device is a reduced capability (RedCap) terminal.

49. The method according to any one of claims 35 to 48, wherein the configuration information of the synchronization signal comprises one or more of:
a transmitting period of the synchronization signal;
time domain resource location information of the synchronization signal;
frequency domain resource location information of the synchronization signal;
an antenna port of the synchronization signal; and
a transmitting beam of the synchronization signal.

50. The method according to claim 49, wherein the configuration information of the synchronization signal is specifically used to configure the terminal device that conforms to the UE identifier.

51. The method according to claim 49 or 50, wherein the time domain resource location information of the synchronization signal comprises one or more of:
a time domain location of a time domain resource of the synchronization signal; and
a duration of the time domain resource of the synchronization signal.

52. The method according to claim 49 or 50, wherein the time domain resource location information of the synchronization signal comprises one or more of:
a second time domain offset, wherein the second time domain offset is used to represent an offset between a reception time of the WUS and a time domain location of a time domain resource of the synchronization signal; and
a duration of the time domain resource of the synchronization signal.

53. The method according to claim 51 or 52, wherein the time domain location of the time domain resource of the synchronization signal comprises: a time domain starting location of the time domain resource of the synchronization signal, and/or a time domain ending location of the time domain resource of the synchronization signal.

54. The method according to any one of claims 49 to 53, wherein the frequency domain resource location information of the synchronization signal comprises one or more of:
a location of a second-type frequency point of a frequency domain resource of the synchronization signal; and
a size of the frequency domain resource of the synchronization signal.

55. The method according to any one of claims 49 to 53, wherein the frequency domain resource location information of the synchronization signal comprises one or more of:
a second frequency domain offset, wherein the second time domain offset is used to represent an offset between the frequency domain location of the WUS and a second-type frequency point of a frequency domain resource of the synchronization signal; and
a size of the frequency domain resource of the synchronization signal.

56. The method according to claim 54 or 55, wherein the second-type frequency point of the frequency domain resource of the synchronization signal comprises one or more of: a lowest frequency point of the frequency domain resource of the synchronization signal; a highest frequency point of the frequency domain resource of the synchronization signal; and a central frequency point of the frequency domain resource of the synchronization signal.

57. The method according to any one of claims 49 to 56, wherein the configuration information of the synchronization signal is specifically used to configure the terminal device that conforms to the UE identifier.

58. A terminal device, comprising:
a first communication unit, configured to monitor a wake-up signal (WUS);
wherein the WUS is used to wake up the terminal device; the WUS carries first information, and the first information is used for an operation performed by the terminal device after being woken up.

59. The terminal device according to claim 58, wherein the WUS further comprises: a UE identifier, wherein the UE identifier is a UE ID, a UE group ID, or a cell ID.

60. The terminal device according to claim 59, wherein the WUS is specifically used to wake up the terminal device that conforms to the UE identifier.

61. The terminal device according to claim 59 or 60, wherein the first information comprises one or more information of:
information for performing random access, wherein the information for performing the random access is configuration information of a first physical random access channel (PRACH) resource;
information for performing initial access, wherein the information for performing the initial access is configuration information of a target initial bandwidth part (BWP); and
information for performing time-frequency synchronization, wherein the information for performing the time-frequency synchronization is configuration information of a synchronization signal.

62. The terminal device according to claim 61, wherein the configuration information of the first PRACH resource is specifically used to configure the terminal device that conforms to the UE identifier.

63. The terminal device according to claim 61 or 62, wherein the configuration information of the first PRACH resource comprises one or more of:
time domain resource location information of a first PRACH;
frequency domain resource location information of the first PRACH;
a period of the first PRACH;
a slot of the first PRACH;
a subcarrier spacing of the first PRACH;
a number of first PRACH occasions;
a mapping relationship between the first PRACH and a synchronization signal block (SSB);
time domain resource location information of a first PRACH occasion;
frequency domain resource location information of the first PRACH occasion; and
a preamble index number.

64. The terminal device according to claim 63, wherein the time domain resource location information of the first PRACH comprises one or more of:
a time domain location of a time domain resource of the first PRACH; and
a duration of the time domain resource of the first PRACH.

65. The terminal device according to claim 63, wherein the time domain resource location information of the first PRACH comprises one or more of:
a first time domain offset, wherein the first time domain offset is used to represent an offset between a reception time of the WUS and a time domain location of a time domain resource of the first PRACH; and
a duration of the time domain resource of the first PRACH.

66. The terminal device according to claim 64 or 65, wherein the time domain location of the time domain resource of the first PRACH comprises:
a time domain starting location of the time domain resource of the first PRACH, and/or a time domain ending location of the time domain resource of the first PRACH.

67. The terminal device according to any one of claims 63 to 66, wherein the frequency domain resource location information of the first PRACH comprises one or more of:
a location of a first-type frequency point of a frequency domain resource of the first PRACH; and
a size of the frequency domain resource of the first PRACH.

68. The terminal device according to any one of claims 63 to 66, wherein the frequency domain resource location information of the first PRACH comprises one or more of:
a first frequency domain offset, wherein the first frequency domain offset is used to represent an offset between a frequency domain location of the WUS and a first-type frequency point of a frequency domain resource of the first PRACH; and
a size of the frequency domain resource of the first PRACH.

69. The terminal device according to claim 67 or 68, wherein the first-type frequency point of the frequency domain resource of the first PRACH comprises one or more of:
a lowest frequency point of the frequency domain resource of the first PRACH;
a highest frequency point of the frequency domain resource of the first PRACH; and
a central frequency point of the frequency domain resource of the first PRACH.

70. The terminal device according to any one of claims 63 to 69, wherein the terminal device further comprises:
a first processing unit, configured to determine the first PRACH resource based on the configuration information of the first PRACH resource, as as to perform the random access on the first PRACH resource.

71. The terminal device according to claim 70, wherein the first communication unit is configured to monitor the WUS in a case where the terminal device is in an idle state.

72. The terminal device according to claim 70 or 71, wherein the first communication unit is configured to receive configuration information of a second PRACH resource configured by a network device before monitoring the WUS;
wherein the configuration information of the second PRACH resource is different from the configuration information of the first PRACH resource.

73. The terminal device according to claim 72, wherein the configuration information of the second PRACH resource is used to determine the second PRACH resource used for performing the random access; and a time domain resource location of the second PRACH resource is different from a time domain resource location of the first PRACH resource.

74. The terminal device according to any one of claims 61 to 73, wherein the configuration information of the target initial BWP comprises:
an ID of the target initial BWP, the target initial BWP being one or more initial BWPs in a plurality of initial BWPs, the plurality of initial BWPs comprising one or more initial uplink BWPs and/or one or more initial downlink BWPs, and the target initial BWP being uplink an BWP and/or a downlink BWP.

75. The terminal device according to claim 74, wherein the configuration information of the target initial BWP is specifically used to configure the terminal device that conforms to the UE identifier.

76. The terminal device according to claim 74 or 75, wherein the terminal device further comprises:
the first processing unit, configured to determine the target initial BWP based on the configuration information of the target initial BWP, as as to perform the initial access on the target initial BWP.

77. The terminal device according to any one of claims 74 to 76, wherein the terminal device is a reduced capability (RedCap) terminal.

78. The terminal device according to any one of claims 61 to 77, wherein the configuration information of the synchronization signal comprises one or more of:
a transmitting period of the synchronization signal;
time domain resource location information of the synchronization signal;
frequency domain resource location information of the synchronization signal;
an antenna port of the synchronization signal; and
a transmitting beam of the synchronization signal.

79. The terminal device according to claim 78, wherein the configuration information of the synchronization signal is specifically used to configure the terminal device that conforms to the UE identifier.

80. The terminal device according to claim 78 or 79, wherein the time domain resource location information of the synchronization signal comprises one or more of:
a time domain location of a time domain resource of the synchronization signal; and
a duration of the time domain resource of the synchronization signal.

81. The terminal device according to claim 78 or 79, wherein the time domain resource location information of the synchronization signal comprises one or more of:
a second time domain offset, wherein the second time domain offset is used to represent an offset between a reception time of the WUS and a time domain location of a time domain resource of the synchronization signal; and
a duration of the time domain resource of the synchronization signal.

82. The terminal device according to claim 80 or 81, wherein the time domain location of the time domain resource of the synchronization signal comprises: a time domain starting location of the time domain resource of the synchronization signal, and/or a time domain ending location of the time domain resource of the synchronization signal.

83. The terminal device according to any one of claims 78 to 82, wherein the frequency domain resource location information of the synchronization signal comprises one or more of:
a location of a second-type frequency point of a frequency domain resource of the synchronization signal; and
a size of the frequency domain resource of the synchronization signal.

84. The terminal device according to any one of claims 78 to 82, wherein the frequency domain resource location information of the synchronization signal comprises one or more of:
a second frequency domain offset, wherein the second time domain offset is used to represent an offset between the frequency domain location of the WUS and a second-type frequency point of a frequency domain resource of the synchronization signal; and
a size of the frequency domain resource of the synchronization signal.

85. The terminal device according to claim 83 or 84, wherein the second-type frequency point of the frequency domain resource of the synchronization signal comprises one or more of: a lowest frequency point of the frequency domain resource of the synchronization signal; a highest frequency point of the frequency domain resource of the synchronization signal; and a central frequency point of the frequency domain resource of the synchronization signal.

86. The terminal device according to any one of claims 78 to 85, wherein the configuration information of the synchronization signal is specifically used to configure the terminal device that conforms to the UE identifier.

87. The terminal device according to any one of claims 78 to 86, wherein the terminal device further comprises:
the first processing unit, configured to determine the synchronization signal based on the configuration information of the synchronization signal, as as to perform the time-frequency synchronization based on the synchronization signal.

88. A network device, comprising:
a second communication unit, configured to transmit a wake-up signal (WUS);
wherein the WUS is used to wake up a terminal device; the WUS carries first information, and the first information is used for an operation performed by the terminal device after being woken up.

89. The network device according to claim 88, wherein the WUS further comprises: a UE identifier, wherein the UE identifier is a UE ID, a UE group ID, or a cell ID.

90. The network device according to claim 89, wherein the WUS is specifically used to wake up the terminal device that conforms to the UE identifier.

91. The network device according to claim 89 or 90, wherein the first information comprises one or more information of:
information for performing random access, wherein the information for performing the random access is configuration information of a first physical random access channel (PRACH) resource;
information for performing initial access, wherein the information for performing the initial access is configuration information of a target initial bandwidth part (BWP); and
information for performing time-frequency synchronization, wherein the information for performing the time-frequency synchronization is configuration information of a synchronization signal.

92. The network device according to claim 91, wherein the configuration information of the first PRACH resource is specifically used to configure the terminal device that conforms to the UE identifier.

93. The network device according to claim 91 or 92, wherein the configuration information of the first PRACH resource comprises one or more of:
time domain resource location information of a first PRACH;
frequency domain resource location information of the first PRACH;
a period of the first PRACH;
a slot of the first PRACH;
a subcarrier spacing of the first PRACH;
a number of first PRACH occasions;
a mapping relationship between the first PRACH and a synchronization signal block (SSB);
time domain resource location information of a first PRACH occasion;
frequency domain resource location information of the first PRACH occasion; and
a preamble index number.

94. The network device according to claim 93, wherein the time domain resource location information of the first PRACH comprises one or more of:
a time domain location of a time domain resource of the first PRACH; and
a duration of the time domain resource of the first PRACH.

95. The network device according to claim 93, wherein the time domain resource location information of the first PRACH comprises one or more of:
a first time domain offset, wherein the first time domain offset is used to represent an offset between a reception time of the WUS and a time domain location of a time domain resource of the first PRACH; and
a duration of the time domain resource of the first PRACH.

96. The network device according to claim 94 or 95, wherein the time domain location of the time domain resource of the first PRACH comprises:
a time domain starting location of the time domain resource of the first PRACH, and/or a time domain ending location of the time domain resource of the first PRACH.

97. The network device according to any one of claims 93 to 96, wherein the frequency domain resource location information of the first PRACH comprises one or more of:
a location of a first-type frequency point of a frequency domain resource of the first PRACH; and
a size of the frequency domain resource of the first PRACH.

98. The network device according to any one of claims 93 to 96, wherein the frequency domain resource location information of the first PRACH comprises one or more of:
a first frequency domain offset, wherein the first frequency domain offset is used to represent an offset between a frequency domain location of the WUS and a first-type frequency point of a frequency domain resource of the first PRACH; and
a size of the frequency domain resource of the first PRACH.

99. The network device according to claim 97 or 98, wherein the first-type frequency point of the frequency domain resource of the first PRACH comprises one or more of:
a lowest frequency point of the frequency domain resource of the first PRACH;
a highest frequency point of the frequency domain resource of the first PRACH; and
a central frequency point of the frequency domain resource of the first PRACH.

100. The network device according to any one of claims 91 to 99, wherein the second communication unit is used to configure configuration information of a second PRACH resource for the terminal device;
wherein the configuration information of the second PRACH resource is different from the configuration information of the first PRACH resource.

101. The network device according to claim 100, wherein the configuration information of the second PRACH resource is used to determine the second PRACH resource used for performing the random access; and a time domain resource location of the second PRACH resource is different from a time domain resource location of the first PRACH resource.

102. The network device according to any one of claims 91 to 101, wherein the configuration information of the target initial BWP comprises:
an ID of the target initial BWP, the target initial BWP being one or more initial BWPs in a plurality of initial BWPs, the plurality of initial BWPs comprising one or more initial uplink BWPs and/or one or more initial downlink BWPs, and the target initial BWP being an uplink BWP and/or a downlink BWP.

103. The network device according to claim 102, wherein the configuration information of the target initial BWP is specifically used to configure the terminal device that conforms to the UE identifier.

104. The network device according to claim 91 to 103, wherein the configuration information of the synchronization signal comprises one or more of:
a transmitting period of the synchronization signal;
time domain resource location information of the synchronization signal;
frequency domain resource location information of the synchronization signal;
an antenna port of the synchronization signal; and
a transmitting beam of the synchronization signal.

105. The network device according to claim 104, wherein the configuration information of the synchronization signal is specifically used to configure the terminal device that conforms to the UE identifier.

106. The network device according to claim 104 or 105, wherein the time domain resource location information of the synchronization signal comprises one or more of:
a time domain location of a time domain resource of the synchronization signal; and
a duration of the time domain resource of the synchronization signal.

107. The network device according to claim 104 or 105, wherein the time domain resource location information of the synchronization signal comprises one or more of:
a second time domain offset, wherein the second time domain offset is used to represent an offset between a reception time of the WUS and a time domain location of a time domain resource of the synchronization signal; and
a duration of the time domain resource of the synchronization signal.

108. The network device according to claim 106 or 107, wherein the time domain location of the time domain resource of the synchronization signal comprises: a time domain starting location of the time domain resource of the synchronization signal, and/or a time domain ending location of the time domain resource of the synchronization signal.

109. The network device according to any one of claims 104 to 108, wherein the frequency domain resource location information of the synchronization signal comprises one or more of:
a location of a second-type frequency point of a frequency domain resource of the synchronization signal; and
a size of the frequency domain resource of the synchronization signal.

110. The network device according to any one of claims 104 to 108, wherein the frequency domain resource location information of the synchronization signal comprises one or more of:
a second frequency domain offset, wherein the second time domain offset is used to represent an offset between the frequency domain location of the WUS and a second-type frequency point of a frequency domain resource of the synchronization signal; and
a size of the frequency domain resource of the synchronization signal.

111. The network device according to claim 109 or 110, wherein the second-type frequency point of the frequency domain resource of the synchronization signal comprises one or more of: a lowest frequency point of the frequency domain resource of the synchronization signal; a highest frequency point of the frequency domain resource of the synchronization signal; and a central frequency point of the frequency domain resource of the synchronization signal.

112. The network device according to any one of claims 104 to 111, wherein the configuration information of the synchronization signal is specifically used to configure the terminal device that conforms to the UE identifier.

113. A terminal device, comprising: a processor and a memory, wherein the memory is configured to store computer programs, the processor is configured to invoke and execute the computer programs stored in the memory to cause the terminal device to perform the method according to any one of claims 1 to 31.

114. A network device, comprising: a processor and a memory, wherein the memory is configured to store computer programs, the processor is configured to invoke and execute the computer programs stored in the memory to cause the terminal device to perform the method according to any one of claims 32 to 57.

115. A chip, comprising: a processor, configured to invoke and execute a computer program from a memory, to cause a device equipped with the chip to perform the method according to any one of claims 1 to 31 or claims 32 to 57.

116. A computer-readable storage medium, for storing a computer program, wherein the computer program, when being executed by a device, causes the device to perform the method according to any one of claims 1 to 31 or claims 32 to 57.

117. A computer program product, comprising computer program instructions, wherein the computer program instructions causes a computer to perform the method according to any one of claims 1 to 31 or claims 32 to 57.

118. A computer program, wherein the computer program causes a computer to perform the method according to any one of claims 1 to 31 or claims 32 to 57.
